# EUROPEAN PATENT APPLICATION

(11) **EP 2 827 102 A1**
(43) Date of publication of application: **21.01.2015**
(21) Application number: 12871092.8
(22) Date of filing: 16.03.2012
(51) Int. Cl.: G01C 21/26, G06Q 50/10

(54) **INFORMATION PRESENTATION DEVICE AND PRESENTATION-USE INFORMATION MANAGEMENT SYSTEM**

(71) Applicant: TOYOTA JIDOSHA KABUSHIKI KAISHA, Toyota-shi, Aichi-ken, 471-8571 (JP)
(72) Inventor: OKAMOTO, Keisuke, Toyota-shi Aichi 471-8571 (JP)
(74) Representative: Winter, Brandl, Fürniss, Hübner, Röss, Kaiser, Polte - Partnerschaft mbB
(86) International application number: PCT/JP2012/056808
(87) International publication number: WO 2013/136501

(57) **Abstract**

A vehicle-use information terminal (100) according to the present invention is provided with an information acquisition unit (110) which acquires post information from an external WEB service center (200). Furthermore, the vehicle-use information terminal (100) is provided with an information summary unit (120) which summarizes a plurality of post information for which post content is shared or is similar from among post information which has been acquired by the information acquisition unit (110).

## Description

### TECHNICAL FIELD

The present invention relates to an information presenting device that processes various pieces of posted information and to a presentation information management system.

### BACKGROUND ART

In recent years, an open tool, such as Twitter (registered trademark), which makes it possible to share real-time information, for example, by posting information that shows short text messages within a predetermined number of characters, called "tweets", has widely spread among information terminals, such as smartphones, portable telephones, and personal computers. Moreover, such information terminals enable users to post or browse, for example, information about points recommended by certain users as convenient places or interesting places, i.e., POI information about points of interest (POI) or enables users to post or browse word-of-mouth information that is information about the reputation and the like, of various shops made by users. The information terminal provides users with these pieces of posted information, such as tweet information, POI information, and word-of-mouth information, for example, by displaying these pieces of posted information on a display device mounted in the information terminal itself.

On the other hand, in recent years, the number of these pieces of posted information has been becoming huge volume in proportion to, for example, an increase in the number of users who use information terminals. When, for example, the user attempts to browse posted information about a requested specific shop, an unnecessary number of pieces of posted information about this shop are displayed. This constitutes a factor of deterioration in the visibility of visually perceiving the posted information. In particular, recently, a system that enables an information terminal mounted in a vehicle, such as an automobile, to use posted information has been developed. Therefore, the demand has increased to improve the visibility of posted information requested by a driver and the like of a vehicle so that the driver can browse it.

Therefore, conventionally, a device disclosed by, for example, Patent Document 1 classifies posted information by categories, such as traffic, weather, and scenes, and changes the display color of the posted information according to these classified categories. As a result, when a plurality of pieces of posted information are displayed on the display device, these pieces of posted information are color-coded into pieces of posted information classified by the categories, and it is possible to easily distinguish a desired piece of posted information from other pieces of posted information.

### PRIOR ART DOCUMENTS

### Patent Document

Patent Document 1: Japanese Laid-Open Patent Publication No. 2011-247831

### SUMMARY OF THE INVENTION

### Problems that the Invention is to Solve

However, if many pieces of posted information having overlapping or similar contents are posted in each category, these pieces of posted information will inevitably be displayed beyond necessity even if pieces of posted information are displayed in different display forms classified by categories, and, after all, it is impossible to avoid a deterioration in visibility due to an increase in posted information.

Accordingly,, it is an objective of the present invention to provide an information presenting device and a presentation information management system that are capable of presenting posted information to users while heightening the visibility of the posted information. Means for Solving the Problems

Means for achieving the above objective and advantages thereof will now be discussed.

To achieve the foregoing objective and in accordance, the present invention provides an information presenting device that presents posted information delivered by a management center that manages posted information. The information presenting device includes an information acquiring section, an information generalizing section, and an information presenting section. The information acquiring section acquires the posted information from the management center. The information generalizing section generalizes a plurality of pieces of posted information that are the same or similar in posted content among the posted information acquired by the information acquiring section. The information presenting section presents the generalized posted information to a user.

According to the aforementioned configuration, the information acquiring section acquires posted information managed by the management center and outputs acquired posted information to the information generalizing section. When posted information is input, the information generalizing section generalizes a plurality of pieces of posted information that are the same or similar in the posted content among the input posted information. As a result, a plurality of pieces of posted information that overlap with each other in the posted content are generalized. Thereafter, the information generalizing section outputs generalized posted information to the information presenting section. As a result, the generalized posted information is presented to the user through the information presenting section. At this time, posted information presented by the information presenting section has been generalized by the information generalizing section, and therefore, pieces of posted information that overlap with each other in the posted content are not presented beyond necessity. Therefore, it is possible to present posted information acquired from the management center to the user with an improved visibility.

Moreover, according to the aforementioned configuration, even if pieces of posted information managed by the management center or pieces of posted information delivered by the management center are pieces of posted information that overlap with each other in the posted content, it is possible to generalize the posted information by only the information presenting device that serves as a principal performer that presents the posted information. As a result, even when the posted contents of a plurality of pieces of posted information possessed by the existing management center overlap with each other or are similar to each other, it is possible to improve the visibility of the posted information.

In accordance with one aspect of the present invention, the posted information is managed to be classified according to positions where the posted information has been posted or according to positions indicated by the posted contents of the posted information, and the information generalizing section generalizes a plurality of pieces of posted information concerning positions at which a request has been made or concerning the position of the information presenting device.

There are many pieces of posted information showing information concerning specific points or specific shops. Therefore, based on positions where such posted information has been posted or based on positions indicated by the posted content, the management center manages posted information classified by positions.

For example, when posted information concerning a specific position is requested by the user, the information generalizing section generalizes posted information posted at the requested position or in an area around the requested position or generalizes posted information including the posted content concerning the requested position or concerning an area around the requested position. This makes it possible to present posted information concerning a position requested by the user to the user with a high visibility.

Moreover, for example, the information generalizing section acquires positional information showing the latitude/longitude showing the position of the information presenting device, and identifies the position of the information presenting device based on this acquired positional information. Thereafter, the information generalizing section generalizes posted information that has been posted at the identified position or in an area around the identified position or generalizes posted information that includes the posted content about the identified position or about an area around the identified position. This makes it possible to present posted information concerning the position of the information presenting device, i.e., concerning the position of the user who has the information presenting device to the user with a high visibility.

In accordance with one aspect of the present invention, the information generalizing section includes an information analyzing section that generalizes the posted information through at least one of the following processes:
(a) a process for selecting representative posted information from among a plurality of pieces of posted information, and
(b) a process for substituting predetermined template information corresponding to posted information for a plurality of pieces of posted information of which the posted contents are the same or similar.

According to the aforementioned configuration, when there is a plurality of pieces of posted information that are the same or similar in the posted content, the information analyzing section performs a process to select posted information serving as a representative from among the pieces of posted information. Thereafter, the information analyzing section outputs posted information selected as a representative to the information presenting section. As a result, posted information selected as a representative from among the pieces of posted information that are the same or similar in the posted content is presented to the user. As a result, it is possible for the user to check the posted content shown by the pieces of posted information only by checking the posted information selected as a representative. Moreover, as a result, it is possible to generalize posted information without performing a process or the like to convert posted information acquired by the information acquiring section, and it is possible to generalize posted information through a simple process.

Moreover, according to the aforementioned configuration, when there is a plurality of pieces of posted information that are the same or similar in the posted content, the information analyzing section discriminates the posted content of the posted information, and selects template information that corresponds to the posted information. Thereafter, the information analyzing section outputs selected template information to the information presenting section instead of the pieces of posted information that are the same or similar in the posted content. As a result, template information that corresponds to the posted information is presented to the user. This makes it possible for the user to check the posted content shown by pieces of posted information merely by checking the template information. Moreover, this makes it possible to present information having high versatility, such as predetermined template information, to the user.

In accordance with one aspect of the present invention, the information generalizing section further includes an information summarizing section that summarizes posted content of posted information through execution of an automatic summarizing process with respect to the posted information when an information amount of the posted information exceeds a prescribed information amount.

According to the aforementioned configuration, the information summarizing section determines whether the information amount of posted information to be presented to the user exceeds a predetermined amount of information, for example, due to a plurality of posted contents included in posted information or an unnecessarily great number of characters of the posted content of generalized posted information. When the information amount of posted information exceeds the prescribed information amount, the information summarizing section performs an automatic summarizing process with respect to the posted information, and, as a result, the information amount of the posted information is made below or equal to the predetermined amount. The information summarizing section outputs summarized posted information to the information presenting section in this way. As a result, posted information below or equal to the predetermined amount is presented to the information presenting section, and the visibility of posted information is further improved.

In accordance with one aspect of the present invention, the information generalizing section further includes a priority determining section and an information processing section. The priority determining section counts the number of pieces of posted information to be generalized and determines priority of posted information based on the counted number. The information processing section that processes the posted information into information that can be presented in a manner that varies in accordance with the determined priority. The information presenting section presents the processed posted information in a manner that varies in accordance with the determined priority.

According to the aforementioned configuration, when there is a plurality of pieces of posted information that are the same or similar in the posted content, the priority determining section counts the number of these pieces of posted information, and assigns priority to the posted information based on the counted number of the posted information. For example, the priority determining section determines that posted information of which the counted number is greater than a predetermined number has a high priority, and determines that posted information of which the counted number is smaller than the predetermined number has as a low priority. The information processing section processes posted information to be presented in accordance with priority determined by the priority determining section, and outputs processed posted information to the information presenting section. The information presenting section presents posted information that has been processed and that has been input from the information processing section to the user in this way. As a result, pieces of posted information that have been generalized are presented in presentation forms that vary in accordance with the number of pieces of generalized posted information. As a result, pieces of posted information that differ in priority are presented in varied manners such that, for example, posted information having high priority is presented in a more highlighted form than posted information having low priority. Therefore, it becomes possible to generalize a plurality of pieces of posted information and yet possible to present generalized posted information in a presentation form corresponding to its priority. Therefore, it becomes possible to present highly useful information, to which elements other than the posted content have been added, to the user.

In accordance with one aspect of the present invention, the information presenting device is formed by a vehicular information terminal that is used in a vehicle and includes a positional information acquiring section that acquires positional information of the vehicle.

The present invention is particularly effective by being applied to a vehicular information terminal for use in a vehicle as configured above. In other words, according to the aforementioned configuration, even if posted information acquired by the vehicular information terminal is a plurality of pieces of posted information that are the same or similar in the posted content, this posted information is generalized and is presented to the user. As a result, even if the user of the vehicular information terminal is a vehicle driver or a passenger, it will become possible to allow the user to easily check the posted content of posted information.

In accordance with one aspect of the present invention, the vehicular information terminal further includes a vehicle state detecting section that detects a state of the vehicle, and the information acquiring section takes into consideration the vehicle state detected by the vehicle state detecting section to perform at least one of the process for acquiring the posted information and the process for presenting the posted information.

A vehicle state is shown by various elements including the traveling position and the traveling speed, and posted information desired by the user changes depending on the vehicle state.

In this respect, according to the aforementioned configuration, a vehicle state is detected by the vehicle state detecting section forming the vehicular information terminal. The information acquiring section takes into consideration the vehicle state detected by the vehicle state detecting section and acquires posted information from the management center. In other words, the information acquiring section acquires posted information correlating with a vehicle state from the management center. Therefore, it is only necessary for the information acquiring section to acquire posted information correlating with a vehicle state, and it becomes possible to acquire only necessary posted information from among an uncountable number of pieces of posted information. The information generalizing section generalizes posted information acquired in consideration of a vehicle state, and presents generalized posted information to the information presenting section. Therefore, it becomes possible for the information presenting section to present posted information correlating with the vehicle state to the user while raising the visibility. Therefore, posted information having high utility is actively and appropriately presented in accordance with a vehicle state in every case even when the user does not request any posted information. This makes it possible to present posted information to the user without requesting the user who performs a vehicle driving operation etc., to execute an operation for acquiring the posted information, and makes it possible to more easily present useful posted information.

Moreover, according to the aforementioned configuration, the information presenting section takes into consideration the vehicle state detected by the vehicle state detecting section, when presenting posted information. This makes it possible for the information presenting section to present posted information correlating with the vehicle state, for example, among pieces of posted information acquired by the information acquiring section. Moreover, this makes it possible for the information presenting section to determine the presentation timing or the presentation period of posted information in consideration of a vehicle state, for example, by presenting posted information based on the vehicle state.

In accordance with one aspect of the present invention, the vehicle state detecting section detects a vehicle traveling speed as the state of the vehicle. The information presenting section takes into consideration the positional information of the vehicle acquired by the positional information acquiring section and the vehicle traveling speed detected by the vehicle state detecting section to determine timing at which the posted information should be presented.

There are many pieces of posted information having contents relative to positions, such as specific points and shops, traveling routes, and traffic congestion states. These pieces of posted information become higher in presentation necessity to users in proportion to an increase in relation to vehicle positions or destinations.

Therefore, the information presenting section takes into consideration the positional information of a vehicle and the traveling speed of the vehicle, when determining presentation timing of posted information to be presented to the user. As a result, for example, when the vehicle approaches a posted position of specific posted information or a position shown by the content of this posted information, this specific posted information is appropriately presented to the information presenting section. Therefore, posted information suitable for the vehicle position whenever the vehicle moves is presented to the user at the necessary time.

In accordance with one aspect of the present invention, the vehicle state detecting section detects, as the state of the vehicle, at least one of a fuel remaining amount of the vehicle and a charging rate of a storage battery when the vehicle is an electric automobile or a hybrid automobile. When the detected fuel remaining amount of the vehicle or the detected charging rate is below or equal to a prescribed remaining amount, the information acquiring section acquires posted information concerning a filling station or a charging station that exists in a traveling area of the vehicle found from the positional information of the vehicle acquired by the positional information acquiring section from the management center.

According to the aforementioned configuration, the vehicle state detecting section detects the fuel remaining amount of the vehicle or the charging rate of the storage battery as an element showing the state peculiar to the vehicle. When the fuel remaining amount of the vehicle or the charging rate of the storage battery is below or equal to a prescribed remaining amount, the information acquiring section acquires posted information concerning a filling station or a charging station that exists in a traveling area of the vehicle from the management center. The information generalizing section acquires and generalizes posted information acquired through the information acquiring section, and presents the generalized posted information to the information presenting section. Therefore, when the fuel remaining amount of the vehicle or the charging rate of the storage battery is below or equal to the prescribed remaining amount, posted information concerning the filling station or the charging station that exists in a traveling area of the vehicle is actively acquired, generalized, and presented to the user. Therefore, posted information concerning the filling station or the charging station is presented to the information presenting section at timing at which the fuel oil feeding or the storage battery charging is expected to be performed when the fuel remaining amount of the vehicle or the charging rate of the storage battery becomes small. This makes it possible to actively present posted information peculiar to a vehicle in accordance with the charge remaining amount or the fuel remaining amount of the vehicle, and the convenience of the vehicular information presenting section is improved.

In accordance with one aspect of the present invention, the vehicular information terminal performs a route search process for searching for a recommended route from a start point to a destination point. The information acquiring section acquires posted information concerning a point that exists in the recommended route found through the route search process or posted information concerning a point included in an area within a predetermined range including the recommended route. The information generalizing section generalizes the selected posted information.

According to the aforementioned configuration, the information acquiring section acquires posted information concerning a point that exists in a recommended route found through the route search process or concerning a point included in an area within a predetermined range including the recommended route from the management center. Thereafter, the information generalizing section generalizes posted information acquired by the information acquiring section, and presents the generalized posted information to the information presenting section. As a result, posted information concerning a traveling route to a destination point of a vehicle is appropriately generalized, and the generalized posted information is appropriately presented to the user. Therefore, posted information having high relation to the traveling route of the vehicle is actively presented to the user, and it becomes possible to present posted information desired by the user without requesting the user to perform an operation for inquiring about posted information.

To achieve the foregoing objective, the present invention provides a presentation information management system that manages posted information to be delivered to an information terminal. The presentation information management system includes an information managing section, an information generalizing section, and an information delivering section. The information managing section collects the posted information and manages the collected posted information. The information generalizing section generalizes a plurality of pieces of posted information that are the same or similar in posted content among the posted information managed by the information managing section. The information delivering section delivers, as presentation information, the generalized posted information to the information terminal.

According to the aforementioned configuration, the information generalizing section forming the presentation information management system generalizes a plurality of pieces of posted information that are the same or similar in the posted content among pieces of posted information managed by the information managing section. As a result, a plurality of pieces of posted information of which the posted contents overlap with each other is generalized. The information generalizing section delivers the generalized posted information to the information terminal owned by the user through the information delivering section. The information terminal acquires posted information delivered from the information delivering section, and presents the acquired posted information to the user. At this time, posted information presented by the information terminal is generalized by the information generalizing section, and therefore, pieces of posted information having overlapped posted contents are not presented beyond necessity. This makes it possible to present posted information to the user in a state in which the visibility of posted information has been improved.

In the aforementioned configuration, posted information is once generalized by the presentation information management system, and is then delivered to the information terminal owned by the user. Therefore, it becomes possible for the information terminal to present posted information having high visibility to the user merely by presenting the posted information acquired from the presentation information management system. Moreover, posted information once generalized is delivered from the presentation information management system to the information terminal, and therefore a large number of pieces of posted information that are the same or similar in the posted content are never delivered from the presentation information management system to the information terminal. Therefore, it is also possible to greatly reduce the amount of communication between the presentation information management system and the information terminal.

In accordance with one aspect of the present invention, the information managing section manages the posted information by classifying the posted information according to positions where the posted information has been posted or according to positions indicated by the posted content of the posted information. The information generalizing section acquires a plurality of pieces of posted information concerning a position requested from the information terminal or a plurality of pieces of posted information concerning the position of the information terminal from the information managing section, and generalizes the acquired posted information.

There are many pieces of posted information showing information concerning specific points or specific shops. Therefore, based on positions of such posted information or positions shown by the posted content, the information managing section manages posted information classified according to positions.

For example, when posted information concerning a specific position is requested by the user, the information generalizing section generalizes posted information posted at the requested position or in an area around the requested position or posted information including the posted content concerning the requested position or an area around the requested position. This makes it possible for the information delivering section to deliver posted information concerning a position requested by the user in a data format in which its visibility has been improved.

Moreover, for example, the information generalizing section acquires positional information showing the latitude/longitude showing the position of the information terminal owned by the user, and identifies the position of the information terminal based on this acquired positional information. Thereafter, the information generalizing section generalizes posted information that has been posted at the identified position or in an area around the identified position or posted information that includes the posted content about the identified position or about an area around identified position. This makes it possible for the information delivering section to deliver posted information concerning the position of the information terminal owned by the user, i.e., concerning the position of the user who has the information presenting device in a data format in which its visibility has been improved.

In accordance with one aspect of the present invention, the information generalizing section includes an information analyzing section that generalizes the posted information through at least one of the following processes:
(a) a process for selecting representative posted information from among a plurality of pieces of posted information, and
(b) a process for substituting predetermined template information corresponding to posted information for a plurality of pieces of posted information of which the posted contents are the same or similar.

According to the aforementioned configuration, when there is a plurality of pieces of posted information that are the same or similar in the posted content, the information analyzing section performs a process for selecting representative posted information from among the pieces of posted information. Thereafter, the information analyzing section delivers posted information selected as a representative to the information terminal owned by the user through the information delivering section. As a result, in the information terminal, posted information selected and delivered as a representative from among the pieces of posted information that are the same or similar in the posted content is presented to the user. As a result, it becomes possible for the user to check the posted content shown by the pieces of posted information only by checking the posted information selected as a representative. Moreover, as a result, it becomes possible for the information generalizing section of the presentation information management system to generalize posted information without performing a process etc., to convert posted information managed by the information managing section, and becomes possible to generalize posted information through a simple process.

Moreover, according to the aforementioned configuration, when there is a plurality of pieces of posted information that are the same or similar in the posted content, the information analyzing section discriminates the posted content of the posted information, and selects template information that corresponds to the posted information. The information analyzing section outputs selected template information to the information delivering section instead of pieces of posted information that are the same or similar in the posted content. The information delivering section delivers template information input from the information analyzing section to the information terminal owned by the user. In the information terminal, template information delivered from the information delivering section is presented to the user. As a result, it becomes possible for the user to check the posted content shown by the pieces of posted information only by checking the template information. Moreover, this makes it possible for the presentation information management system to deliver information having high general-purpose properties, such as predetermined template information, and to present delivered information to the information terminal.

In accordance with one aspect of the present invention, the information generalizing section further includes an information summarizing section that summarizes posted content of posted information through execution of an automatic summarizing process with respect to the posted information when an information amount of the posted information exceeds a prescribed information amount.

According to the aforementioned configuration, the presentation information management system includes the information summarizing section that has an automatic abstract function. The information summarizing section determines whether the information amount of posted information to be delivered exceeds a prescribed information amount, for example, due to the fact that a plurality of posted contents are included in posted information or the fact that the number of characters of the posted content of generalized posted information is large beyond necessity. When the information amount of posted information exceeds the predetermined amount, the information summarizing section performs an automatic summarizing process with respect to the posted information, and, as a result, the information amount of the posted information is made below or equal to the predetermined amount. The information summarizing section delivers summarized posted information to the information presenting section owned by the user through the information delivering section. As a result, in the information terminal, posted information below or equal to the predetermined amount is presented, and the visibility of posted information is further improved.

Moreover, in the aforementioned configuration, the information amount of posted information delivered by the information delivering section is restrained to be below or equal to the prescribed information amount. Therefore, it becomes possible to reduce the amount of communication between the information delivering section and the information terminal, and becomes possible to smoothly deliver posted information from the information delivering section to the information terminal.

In accordance with one aspect of the present invention, the information generalizing section further includes an information processing section that
counts the number of pieces of posted information to be generalized,
determines priority of posted information based on the counted number, and
processes the posted information into information that can be presented by means of the information terminal in a manner that varies in accordance with the determined priority.

According to the aforementioned configuration, when there is a plurality of pieces of posted information that are the same or similar in the posted content, the priority determining section of the presentation information management system counts the number of these pieces of posted information, and assigns priority to the posted information based on the counted number of the posted information. For example, the priority determining section determines that posted information of which the counted number is greater than a predetermined number has a priority high priority, and determines that posted information of which the counted number is smaller than the predetermined number has a low priority. The information processing section forming the presentation information management system processes posted information to be presented in accordance with priority determined by the priority determining section, and outputs processed posted information to the information delivering section. The information delivering section delivers processed posted information to the information terminal owned by the user. In the information terminal, posted information processed in accordance with priority is presented in this way. As a result, in the information terminal, pieces of posted information that have been generalized are presented in presentation manners that vary accordance with the number of pieces of generalized posted information. As a result, pieces of posted information that differ in priority are presented in varied manners in such a manner that, for example, posted information having high priority is presented in a more highlighted form than posted information having low priority. Therefore, it becomes possible for the presentation information management system to generalize a plurality of pieces of posted information and yet possible to deliver generalized posted information as information capable of being presented in a presentation form corresponding to its priority. Therefore, it becomes possible for the presentation information management system to deliver highly useful information to which elements other than the posted content have been added.

In accordance with one aspect of the present invention, the information terminal is formed by a vehicular information terminal that is used in a vehicle and includes a positional information acquiring section that acquires positional information of the vehicle. The information generalizing section selects posted information to be generalized based on the positional information of the vehicle obtained through wireless communication with the vehicular information terminal.

The present invention is particularly effective by being applied so that a vehicular information terminal for use in a vehicle is an object to which posted information is delivered as configured above. In other words, according to the aforementioned configuration, even if posted information managed by the information managing section is a plurality of pieces of posted information that are the same or similar in the posted content, generalized posted information is delivered to the vehicular information terminal used in the vehicle. This posted information is presented to the vehicular information terminal, and, as a result, even if the user of the vehicular information terminal is a vehicle driver or a passenger, it will become possible to allow the user to easily check the posted content of posted information.

In accordance with one aspect of the present invention, the vehicular information terminal further includes a vehicle state detecting section that detects a state of the vehicle. The information generalizing section selects posted information to be generalized based on a detection result of the vehicle state detecting section obtained through wireless communication with the vehicular information terminal.

A vehicle state is shown by various elements including the traveling position and the traveling speed, and posted information desired by the user changes depending on the vehicle state.

In this respect, according to the aforementioned configuration, a vehicle state is detected by the vehicle state detecting section forming the vehicular information terminal. The information generalizing section forming the presentation information management system acquires a detection result of the vehicle state detecting section through wireless communication with the vehicular information terminal, and selects posted information to be generalized while taking this detection result into consideration. In other words, the information generalizing section selects posted information correlating with the state of a vehicle using the vehicular information terminal as posted information to be generalized. Therefore, it becomes possible for the information generalizing section to limit a to-be-generalized subject to posted information correlating with the vehicle state.

Moreover, the information generalizing section generalizes posted information selected in consideration of a vehicle state, and delivers generalized posted information to the vehicular information terminal through the information delivering section. This posted information is presented, and, as a result, it becomes possible for the vehicular information terminal to present posted information correlating with the vehicle state to the user with high visibility. Therefore, it becomes possible for the presentation information management system to appropriately deliver posted information having high utility in accordance with a vehicle state in every case even when the user does not request any posted information. As a result, in the vehicular information terminal, posted information to be presented is delivered from the presentation information management system without requesting the user who performs a vehicle driving operation etc., to perform an operation for requesting posted information, and it becomes possible to more easily present posted information useful for the user.

In accordance with one aspect of the present invention, the vehicle state detecting section detects a traveling speed of the vehicle as the state of the vehicle. The information delivering section determines timing at which the generalized posted information is delivered based on the positional information of the vehicle obtained through wireless communication with the vehicular information terminal and the information showing the traveling speed of the vehicle.

There are many pieces of posted information having contents relative to positions, such as specific points and shops, traveling routes, and traffic congestion states. These pieces of posted information become higher in presentation necessity to users in proportion to an increase in relation to vehicle positions or destinations.

Therefore, the information delivering section forming the presentation information management system takes into consideration the positional information of a vehicle and the traveling speed of the vehicle, and determines delivering timing of posted information to be presented to the user. As a result, for example, when a vehicle approaches a posted position of specific posted information or a position shown by the content of this posted information, this specific posted information is appropriately delivered to the vehicular information terminal. The vehicular information terminal appropriately presents delivered posted information to the user. Therefore, it becomes possible for the vehicular information terminal to acquire posted information suitable for a vehicle position whenever the vehicle moves and to present acquired posted information at timing suitable for a vehicle position whenever the vehicle moves.

In accordance with one aspect of the present invention, the vehicle state detecting section detects, as the state of the vehicle, at least one of a fuel remaining amount of the vehicle and a charging rate of a storage battery when the vehicle is an electric automobile or a hybrid automobile. When the fuel remaining amount of the vehicle obtained through wireless communication with the vehicular information terminal or a detection value of the charging rate is below or equal to a prescribed remaining amount value, the information generalizing section selects, as posted information to be generalized, posted information concerning a filling station or a charging station that exists in a traveling area of the vehicle found from the positional information of the vehicle.

According to the aforementioned configuration, the vehicle state detecting section forming the vehicular information terminal detects a fuel remaining amount of a vehicle or a charging rate of a storage battery as an element showing a state peculiar to the vehicle. When the fuel remaining amount of the vehicle using the vehicular information terminal or the charging rate of the storage battery is below or equal to a prescribed remaining amount, the information acquiring section forming the presentation information management system acquires posted information concerning a filling station or a charging station that exists in a traveling area of the vehicle from the information managing section. The information generalizing section acquires and generalizes posted information acquired through the information acquiring section, and delivers generalized posted information to the vehicular information terminal through the information delivering section.

Therefore, when the fuel remaining amount of the vehicle or the charging rate of the storage battery becomes below or equal to the prescribed remaining amount, posted information concerning the filling station or the charging station that exists in a traveling area of the vehicle is delivered from the presentation information management system to the vehicular information terminal. Therefore, it becomes possible for the vehicular information terminal to acquire posted information concerning the filling station or the charging station at timing at which the fuel oil feeding or the storage battery charging is expected to be performed when the fuel remaining amount of the vehicle or the charging rate of the storage battery becomes small, and it becomes possible for the vehicular information terminal to appropriately present acquired posted information. As a result, it becomes possible for the presentation information management system to actively deliver posted information peculiar to the vehicle in accordance with the fuel remaining amount of the vehicle or the charging rate, and the convenience of the vehicular information presenting section to which the posted information is presented is improved.

In accordance with one aspect of the present invention, the vehicular information terminal performs a route search process for searching for a recommended route from a start point to a destination point. The information generalizing section acquires information showing the recommended route found by the route search process through wireless communication with the vehicular information terminal, and selects, as posted information to be generalized, posted information concerning a point that exists in the recommended route or posted information concerning a point included in an area within a predetermined range including the recommended route.

According to the aforementioned configuration, the information generalizing section forming the presentation information management system acquires posted information concerning a point that exists in a recommended route found through the route search process or concerning a point included in an area within a predetermined range including the recommended route from the information managing section. Thereafter, the information generalizing section generalizes posted information acquired by the information acquiring section, and delivers generalized posted information to the vehicular information terminal owned by the user through the information delivering section. As a result, posted information concerning a traveling route to a destination point of a vehicle is appropriately generalized, and generalized posted information is appropriately delivered to the vehicular information terminal. Therefore, posted information having high relation to the traveling route of the vehicle is actively presented to the user, and it becomes possible for the vehicular information terminal to present posted information desired by the user without requesting the user to perform an operation for inquiring about posted information.

### BRIEF DESCRIPTION OF THE DRAWINGS

Fig. 1 is a block diagram showing a schematic configuration of an external web service center and a vehicular information terminal that forms an information presenting device according to a first embodiment of the present invention;
Fig. 2 is a map showing one example of posted information together with its manner of generalization;
Fig. 3 is a flowchart showing one example of a generalizing process of posted information by the information presenting device of the embodiment;
Fig. 4 is a flowchart showing one example of a priority determining process performed by a priority determining section of the embodiment;
Fig. 5 is a diagram showing one example of a manner in which posted information is displayed that has been generalized and is presented by an information presenting section of the embodiment;
Fig. 6 is a diagram showing one example of a manner in which posted information is displayed when a generalizing process is not performed;
Fig. 7 is a block diagram showing a schematic configuration of a vehicular information terminal, an external web service center, and an information generalization center, which forms a presentation information management system according to a second embodiment of the present invention;
Fig. 8 is a flowchart showing one example of a generalizing process of posted information performed by the presentation information management system of the embodiment;
Fig. 9 is a block diagram showing a schematic configuration of an external web service center and a vehicular information terminal, which forms an information presenting device according to a third embodiment of the present invention;
Fig. 10 is a flowchart showing one example of a generalizing process of posted information performed by the information presenting device of the embodiment;
Fig. 11 is a diagram showing one example of a manner in which posted information is displayed that has been generalized and is presented by the information presenting section of the embodiment;
Fig. 12 is a diagram showing one example of a manner in which posted information is displayed that has been generalized and is presented by the information presenting section of the embodiment;
Fig. 13 is a block diagram showing a schematic configuration of an external web service center and a vehicular information terminal, which forms an information presenting device according to a fourth embodiment of the present invention;
Fig. 14 is a flowchart showing one example of a generalizing process of posted information performed by the information presenting device of the embodiment;
Fig. 15 is a diagram showing one example of a manner in which posted information is displayed that has been generalized and is presented by the information presenting section of the embodiment;
Fig. 16 is a diagram showing one example of a manner in which posted information is displayed that has been generalized and is presented by the information presenting section in an information presenting device and a presentation information management system according to another embodiment of the present invention;
Fig. 17 is a diagram showing one example of a manner in which posted information is displayed that has been generalized and is presented by an information presenting section in an information presenting device and a presentation information management system according to another embodiment of the present invention;
Fig. 18 is a map showing one example of posted information together with corresponding template information in an information presenting device and a presentation information management system according to another embodiment of the present invention;
Fig. 19 is a block diagram showing a schematic configuration of a vehicular information terminal, an external web service center, and an information generalization center, which forms a presentation information management system according to another embodiment of the present invention; and
Fig. 20 is a block diagram showing a schematic configuration of a vehicular information terminal, an external web service center, and an information generalization center, which forms a presentation information management system according to another embodiment of the present invention.

### MODES FOR CARRYING OUT THE INVENTION

### First Embodiment

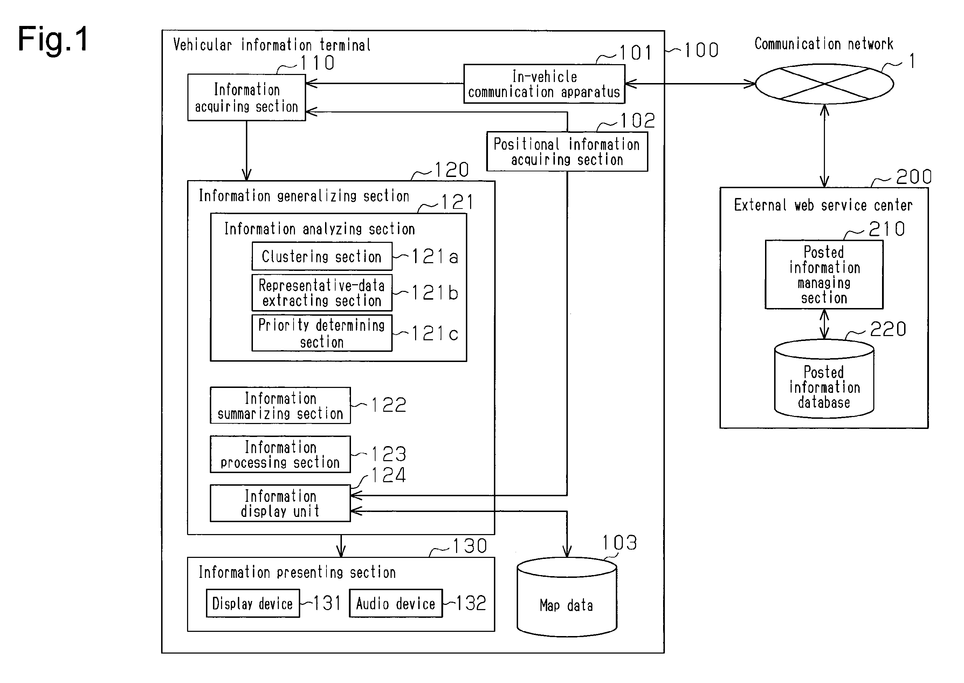

An information presenting device according to a first embodiment of the present invention will be hereinafter described with reference to Fig. 1 to Fig. 6.

As shown in Fig. 1, the information presenting device of the present embodiment is formed by a vehicular information terminal 100 for use in a vehicle such as an automobile.

The vehicular information terminal 100 includes a vehicular communication apparatus 101 communicable with an external web service center 200, which manages posted information, such as Tweets, point of interest (POI) information, and word-of-mouth information. For example, positional information showing the latitude/longitude of an information terminal owned by a user when information is posted by the information terminal is correlated with posted information managed by the external web service center 200. Moreover, for example, information that recommends a specific shop or information showing road conditions or traffic congestion occurrence conditions is included in posted information. Furthermore, in some cases, information showing a regional name and the like of specific shops or corresponding roads is included in posted information.

In the present embodiment, the management center is formed by the external web service center 200.

The vehicular information terminal 100 also includes an information acquiring section 110, which acquires posted information managed by the external web service center 200 from the external web service center 200. The information acquiring section 110 of the present embodiment acquires positional information showing the latitude/longitude of the vehicular information terminal 100, i.e., showing the latitude/longitude of a vehicle using the vehicular information terminal 100 from a positional information acquiring section 102 formed by, for example, a GPS mounted in the vehicular information terminal 100. Thereafter, the information acquiring section 110 accesses the external web service center 200 through the vehicular communication apparatus 101 and through a communication network 1, and acquires posted information concerning an area around the vehicle from the external web service center 200. When there is a plurality of pieces of posted information concerning a certain point, the information acquiring section 110 acquires these pieces of posted information from the external web service center 200. Thereafter, the information acquiring section 110 outputs the acquired posted information an information generalizing section 120, which generalizes the posted information. Moreover, for example, when posted information concerning a specific point (position) is requested by the user of the vehicular information terminal 100, the information acquiring section 110 likewise acquires posted information concerning this point from the external web service center 200. Moreover, for example, the information acquiring section 110 performs a route search process for searching for a route to a destination set by the driver. When a destination is set by the driver, the information acquiring section 110 acquires posted information concerning points and the like included in the route from the position of the vehicular information terminal 100 to the destination, i.e., the route from the position of the vehicle using the vehicular information terminal 100 to the destination from the external web service center 200.

The information generalizing section 120 of the present embodiment includes an information analyzing section 121, which analyzes posted information acquired from the external web service center 200. The information analyzing section 121 has a clustering section 121a, which performs so-called clustering, in which a plurality of pieces of posted information are classified into groups of posted information each of which is the same or similar in the posted content. The information analyzing section 121 also has a representative-data extracting section 121 b, which extracts to-be-representative posted information from among pieces of posted information classified by the clustering section 121a. The information analyzing section 121 also has a priority determining section 121c, which determines priority with respect to posted information extracted as representatives by the representative-data extracting section 121 b.

When posted information acquired by the information acquiring section 110 is input, the clustering section 121a, which is one of the aforementioned sections, classifies this posted information into, for example, categories of posted information each of which is the same or similar in the posted position of posted information or in correlated positional information. Alternatively, the clustering section 121a classifies posted information into, for example, groups of posted information each of which is the same or similar in the posted content because of showing information concerning shops or road conditions that are the same in kind. Thereafter, the clustering section 121a outputs the grouped posted information to the representative-data extracting section 121b. The clustering section 121 a classifies posted information into groups of posted information by means of, for example, prerecorded keywords or text mining. As a result, grouping is performed so that a group of pieces of posted information each of which has, for example, attribute "traffic congestion" and position "point A" in common becomes the same or similar posted information in the posted content.

When pieces of posted information classified into groups are input from the clustering section 121a, the representative-data extracting section 121b extracts to-be-representative posted information of each group from among the pieces of posted information. When to-be-representative posted information is extracted, the representative-data extracting section 121b extracts posted information, for example, at random from each group. Moreover, for example, the representative-data extracting section 121b extracts posted information posted from an information terminal owned by a predetermined user as a representative. Moreover, for example, the representative-data extracting section 121b extracts many approximate pieces of posted information in posted information classified into groups as representatives. Thereafter, the representative-data extracting section 121b outputs the extracted posted information and information showing the number of pieces of posted information of a group to which the extracted posted information belongs to the priority determining section 121 c.

When posted information extracted as a representative by the representative-data extracting section 121b is input, the priority determining section 121c determines (assigns) priority for posted information extracted as a representative based on the number of pieces of posted information of a group to which the posted information belongs. For example, when the number of pieces of posted information of a group to which the posted information extracted as a representative belongs is greater than or equal to a predetermined threshold value, the priority determining section 121c determines that the priority of the posted information to be representative has, for example, a high priority. For example, when the number of pieces of posted information of a group to which the posted information extracted as a representative belongs is smaller than the predetermined threshold value, the priority determining section 121c determines that the priority of the posted information to be representative has, for example, a low priority. Thereafter, the priority determining section 121c outputs posted information of which the priority has been determined to an information summarizing section 122, which performs an automatic summarizing process of posted information.

When posted information is input from the priority determining section 121c, the information summarizing section 122 calculates the information amount of this posted information. Thereafter, when the calculated information amount of this posted information exceeds a prescribed amount of information, the information summarizing section 122 performs an information summarizing process with respect to this posted information. As a result, the posted content of posted information that exceeds the prescribed amount is summarized, and the information amount of the posted information falls within the prescribed amount. For example, the information summarizing section 122 performs a process to omit unrelated words other than words possessed in common by pieces of posted information of the same group or to omit sentences including the unrelated words in the automatic summarizing process. Moreover, for example, the information summarizing section 122 performs a process to omit unrelated words other than keywords pre-recorded in the clustering section 121 a as keywords used for grouping or to omit sentences including the unrelated words in the automatic summarizing process. Thereafter, the information summarizing section 122 outputs posted information that has undergone the summarizing process to an information processing section 123, which processes the posted information into data that can be presented to users.

When posted information is input, the information processing section 123 gives an icon or balloon for display to this posted information. Moreover, for example, the information processing section 123 of the present embodiment gives a relatively large icon or balloon to posted information having high priority, and gives a relatively small icon or balloon to posted information having low priority. As a result, the posted information is converted into image data for display. Thereafter, the information processing section 123 outputs the converted image data to an information display unit 124. Likewise, when posted information is input, the information processing section 123 converts this posted information into audio data. Thereafter, for example, the information processing section 123 makes the sound volume of this audio data relatively great when posted information having high priority is converted into audio data, and makes the sound volume of this audio data relatively small when posted information having low priority is converted into audio data. Moreover, for example, the information processing section 123 converts the posted content into audio data, and adds audio data used to guide the priority of the posted content to the converted audio data. Thereafter, the information processing section 123 outputs the audio data to an information presenting section 130, which presents posted information to the user of the vehicular information terminal 100.

When image data is input, the information display unit 124 plots this image data on map data 103. Thereafter, the information display unit 124 outputs this plotted map data 103 and the image data to the information presenting section 130.

The information presenting section 130 is composed of, for example, a display device 131 capable of visibly displaying posted information and an audio device 132 capable of audibly outputting posted information. When map data 103 on which image data has been plotted is input, the display device 131 presents an image showing posted information to the user of the vehicular information terminal 100 through the output of this map data 103. When audio data is input, the audio device 132 audibly presents posted information to the user of the vehicular information terminal 100 through the output of this audio data.

On the other hand, the external web service center 200 includes a posted information managing section 210, which manages posted information transmitted from a plurality of information terminals through the communication network 1. The external web service center 200 also has a posted information database 220 in which posted information collected from the information terminals is recorded.

Whenever posted information is transmitted from the information terminals, the posted information managing section 210 among those components records this posted information in the posted information database 220. Moreover, when a request is issued for posted information concerning specific areas or shops from information terminals including the vehicular information terminal 100, the posted information managing section 210 delivers posted information meeting the request to the vehicular information terminal 100.

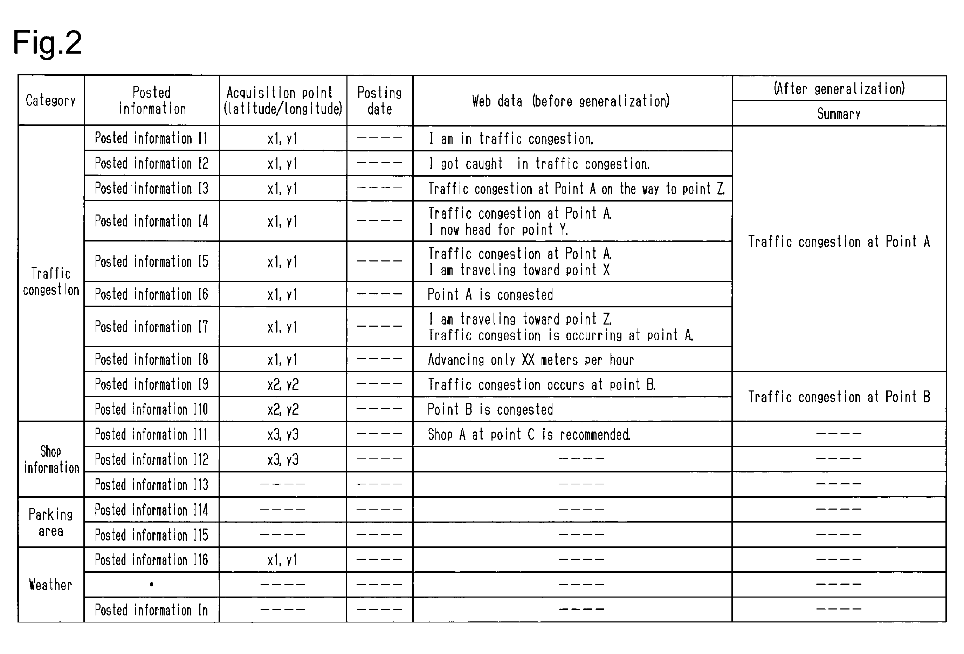

Next, a manner in which posted information is generalized by the information generalizing section 120 of the present embodiment will be described with reference to Fig. 2.

As shown in Fig. 2, for example, it is assumed that pieces of posted information 11 to In having posted contents relative to a plurality of points are posted, and, for example, it is assumed that pieces of posted information 11 to I8 showing the occurrence of traffic congestion are posted as posted information concerning a point A (x1, y1). Information that shows the name of the point A and the occurrence of traffic congestion at the point A is included in, for example, the pieces of posted information I3 to I7 among the pieces of posted information 11 to I8. Moreover, for example, positional information showing the latitude/longitude (x1, y1) of the posted position of each of the posted information I1 to 18 is correlated with each of the posted information I1 to I8.

The information generalizing section 120 of the present embodiment classifies the plurality of pieces of posted information 11 to In based on keywords, such as "traffic congestion", "shop", "point name", "recommendation", and "weather", and based on positional information correlated with each of the posted information 11 to In. For example, the pieces of posted information I1 to 18 are identified as posted information showing the occurrence of traffic congestion at the point A (x1, y1). Thereafter, for example, the information generalizing section 120 selects the posted information I4 as posted information that represents the pieces of posted information 11 to 18. Moreover, the information generalizing section 120 regards the posted information 14 as exceeding a prescribed information amount, and performs an automatic summarizing process with respect to the posted information I4. As a result, the posted content "I will travel toward point Y from now", which is low in the relation with the occurrence of traffic congestion at the point A (x1, y1), is omitted in, for example, "Point A is being congested and I will travel toward point Y from now.", i.e., in the posted contents to the effect that the point A is being congested and that the vehicle will move toward point Y from now. In the present embodiment, the pieces of posted information I1 to I8 are generalized into one piece of information "Point A is being congested" in this way. Thereafter, the generalized information is presented to the user by the information presenting section 130.

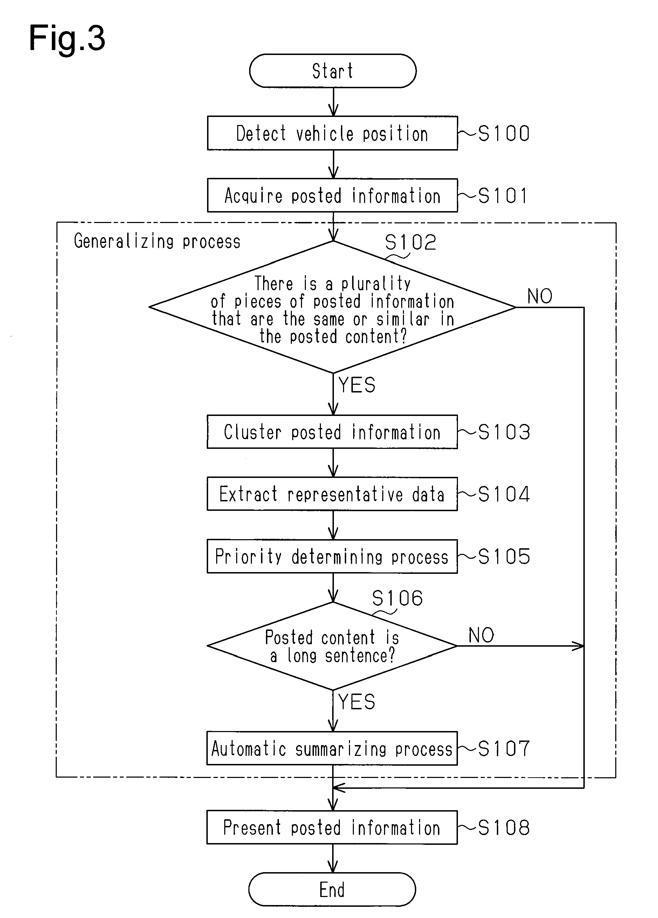

Operation of the information presenting device of the present embodiment will be hereinafter described with reference to Fig. 3 to Fig. 6.

As shown in Fig. 3 as step S100, for example, the position of the vehicle used by the user of the vehicular information terminal 100 is detected by a positional information acquiring section 102. Thereafter, posted information including the content about this detected position or posted information posted at the detected position is acquired from the external web service center 200 (step S101). When a destination is set by the driver, the information acquiring section 110 acquires posted information concerning this destination or posted information concerning points existing in a route to the destination from the external web service center 200.

Thereafter, a plurality of pieces of posted information that are the same or similar in the posted content among the acquired pieces of posted information are clustered (step S102: YES, S103). As a result, pieces of posted information related to the vehicle position are classified into groups in accordance with the posted content. Thereafter, to-be-representative posted information is extracted in each group (step S104). Thereafter, a priority determining process is performed to determine the importance of posted information extracted as a representative in accordance with the number of pieces of posted information of a group to which each piece of posted information belongs (step S105).

If the information amount of the posted information exceeds a prescribed information amount due to the fact that the posted content of the posted information extracted as a representative is a long sentence (step S106: YES), an automatic summarizing process is performed with respect to the posted information (step S107). Thereafter, posted information summarized through the automatic summarizing process is presented to the user of the vehicular information terminal 100 (step S108). If the information amount of posted information extracted as a representative falls within the prescribed information amount (step S106: NO), the posted information extracted at the preceding step S104 is presented to the user without performing the automatic summarizing process.

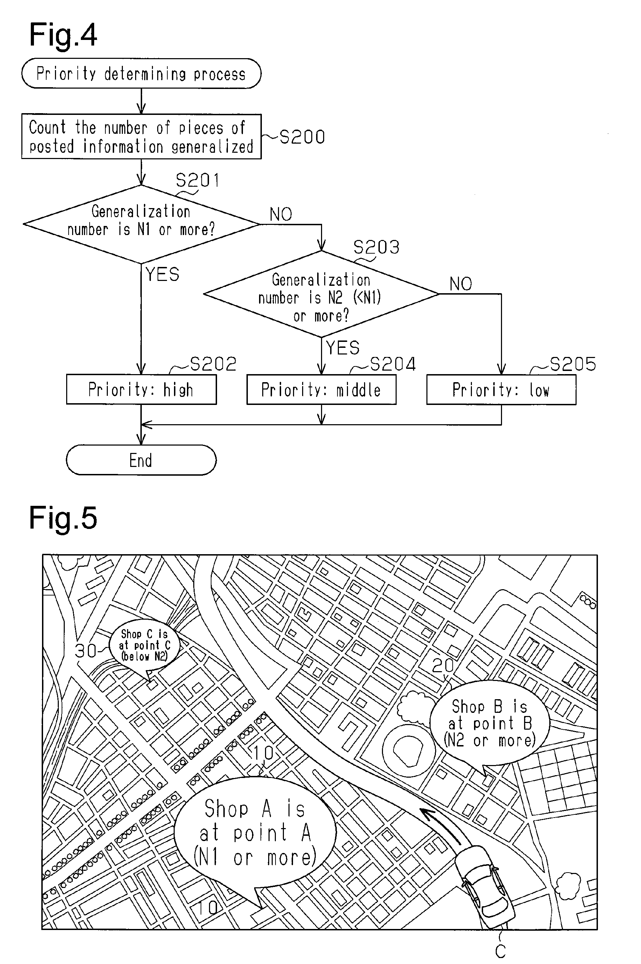

Next, the priority determination procedure of posted information performed by the priority determining section 121c of the present embodiment will be described with reference to Fig. 4.

As shown in Fig. 4, the number of pieces of posted information in a group to which posted information extracted as a representative belongs is first counted (step S200). Thereafter, it is determined whether the number of the counted pieces of posted information is a threshold value N1 or more to determine whether the priority of the posted information is high (step S201). If the number of pieces of posted information in the group is greater than or equal to the threshold value N1 (step S201: YES), the posted frequency of information related to the posted content shown by the posted information belonging to the group is regarded as high, and the priority of the posted information extracted as a representative is set at high (step S202).

On the other hand, if the number of pieces of posted information in the group is smaller than the threshold value N1 (step S201: NO), it is determined whether the number of pieces of posted information in the group is greater than a threshold value N2 (N2 < N1), which is used to determine whether the priority of the posted information is middle (step S203). If the number of pieces of posted information in the group is the threshold value N2 or more (step S203: YES), the priority of the posted information extracted as a representative is set at middle (step S204).

On the other hand, if the number of pieces of posted information in the group is smaller than the threshold value N2 (step S203: NO), the posted frequency of this posted information is regarded as low, and the priority of the posted information extracted as a representative is set at low (step S205).

As a result, when a vehicle C using the vehicular information terminal 100 travels through a certain traveling area as illustrated in Fig. 5, pieces of posted information that exist in this traveling area are displayed as balloons 10 to 30 differing from each other in size. In the present embodiment, posted information concerning the point A that is set to have, for example, a high priority is displayed by the balloon 10 determined to have, for example, a large size. Posted information concerning a point B that is set to have, for example, a middle priority is displayed by the balloon 20 determined to have, for example, a middle size. On the other hand, posted information concerning a point C that is set to have, for example, a low priority is displayed by the balloon 30 determined to have, for example, a small size. For example, the number or priority of the posted frequency is guided when posted information is presented by a voice, and, as a result, the priority of posted information is reflected.

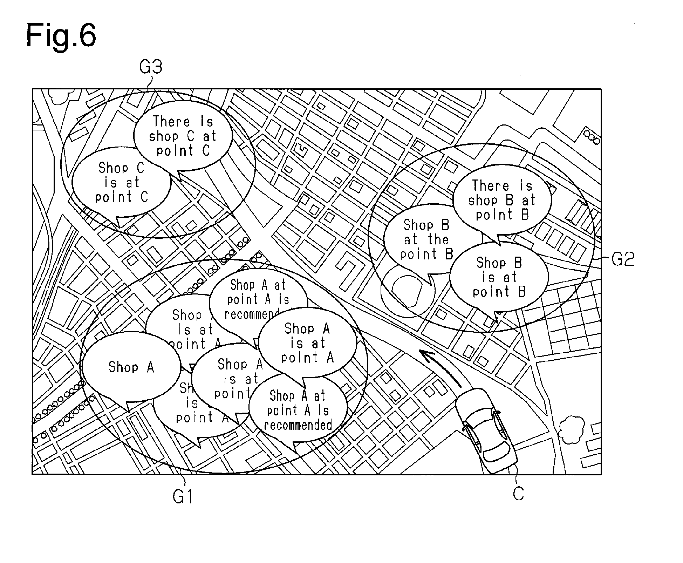

Posted information is displayed on the display device 131 based on the priority determined in this way, and, as a result, as illustrated in Fig. 6, a plurality of pieces of posted information that are greater than or equal to the threshold value N1 and that are included in group G1 are highlighted as one posted information having high priority in the form of, for example, the balloon 10 of Fig. 5. Therefore, pieces of posted information that are the same or similar in the posted content included in group G1 are generally displayed as one posted information in which the number of pieces of posted information is reflected, and the visibility of the posted information included in group G1 is improved. As illustrated in Fig. 6, pieces of posted information that are greater than or equal to the threshold value N2 included in group G2 are also generally displayed as one posted information having a middle priority in the form of the balloon 20 of Fig. 5. On the other hand, as illustrated in Fig. 6, pieces of posted information that are smaller than the threshold value N2 included in group G3 are also generally displayed as one posted information having a low priority in the form of the balloon 30 of Fig. 5. For example, when there are no other pieces of posted information that are the same or similar in the posted content in one piece of the posted information, this piece of posted information is displayed.

In the present embodiment, the generalizing process and the priority determining process are thus performed by the information generalizing section 120. As a result, posted information that represents each posted content is displayed in the manner illustrated in Fig. 5 instead of a plurality of pieces of posted information that belong to each of the groups G1 to G3 illustrated in Fig. 6.

The information presenting device according to the present embodiment achieves the following advantages.

(1) The vehicular information terminal 100 is provided with the information acquiring section 110, which acquires posted information from the external web service center 200. The vehicular information terminal 100 is also provided with the information generalizing section 120, which generalizes a plurality of pieces of posted information that are the same or similar in the posted content among pieces of posted information acquired by the information acquiring section 110. Therefore, it becomes possible for the vehicular information terminal 100 to generalize a plurality of pieces of posted information that are the same or similar in the posted content and to present the posted information to the user. As a result, it is possible to present the posted information to the user in a state of having raised its visibility without allowing pieces of posted information that overlap with each other in the posted content to be presented beyond necessity. Moreover, as described above, the vehicular information terminal 100 is provided with the information acquiring section 110 and the information generalizing section 120, and therefore, it is possible for the vehicular information terminal 100 to generalize posted information acquired from the external web service center 200 by means of only the vehicular information terminal 100. As a result, even if a plurality of pieces of posted information possessed by the external web service center 200 are overlapped or are similar in the posted content, it will become possible to improve the visibility of the pieces of posted information.
(2) The information generalizing section 120 generalizes a plurality of pieces of posted information concerning positions that have been requested. This makes it possible to present posted information concerning a position requested by a user to the user in a state of having high visibility. Moreover, as described above, the information generalizing section 120 acquires positional information showing the latitude/longitude of the vehicular information terminal 100, and identifies the position of the vehicular information terminal 100 based on this acquired positional information. Thereafter, the information generalizing section 120 generalizes posted information that has been posted at the identified position or in an area around the identified position or posted information that includes the posted content about the identified position or about an area around the identified position. This makes it possible to present posted information concerning the position of the vehicular information terminal 100, i.e., concerning the position of the user who has the vehicular information terminal 100 to the user in a state of having high visibility. Moreover, this makes it possible to allow the vehicular information terminal 100 to automatically acquire posted information even if the user of the vehicular information terminal 100 does not request it and possible to generalize and display this automatically acquired posted information.
(3) The information generalizing section 120 is provided with the information analyzing section 121, which performs a process to select posted information serving as a representative from among a plurality of pieces of posted information. As a result, it is possible for the information presenting section 130 to present posted information selected as a representative from among a plurality of pieces of posted information that are the same or similar in the posted content to the user. Moreover, as a result, it is possible for the information generalizing section 120 to generalize posted information without performing a process etc., to convert posted information acquired by the information analyzing section 121, and is possible for the information generalizing section 120 to generalize posted information through a simple process.
(4) The information generalizing section 120 is provided with the information summarizing section 122, which summarizes the posted content of posted information through performing an automatic summarizing process with respect to the posted information when the information amount of posted information exceeds a prescribed information amount. Therefore, it is possible for the information generalizing section 120 to change the information amount of posted information that exceeds the predetermined amount so as to be smaller than or equal to the predetermined amount through an automatic summarizing process. As a result, the information presenting section 130 presents posted information that is below or equal to the prescribed information amount, and the visibility of the posted information is further improved.
(5) The information generalizing section 120 is provided with the representative-data extracting section 121 b, which counts the number of pieces of posted information to be generalized and determines the priority of the posted information based on the counted number, and is provided with the priority determining section 121c, which processes posted information into information that can be presented in manners that vary in accordance with determined priority. Moreover, the information presenting section 130 presents processed posted information in manners that vary in accordance with priority. As a result, pieces of posted information that differ in priority are presented in varied manners such that, for example, posted information having high priority is presented in a more highlighted form than posted information having low priority. Therefore, it is possible to generalize a plurality of pieces of posted information and yet possible to present the generalized posted information in a presentation form corresponding to its priority. Therefore, it is possible to present highly useful information, to which elements other than the posted content have been added, to the user.
(6) The information presenting device is formed by the vehicular information terminal 100, which includes the positional information acquiring section 102 to acquire vehicle position information of a vehicle and is used in the vehicle. As a result, even if the user of the vehicular information terminal 100 is a vehicle driver or a passenger, it will become possible to allow the user to easily check the posted content of posted information.

### Second Embodiment

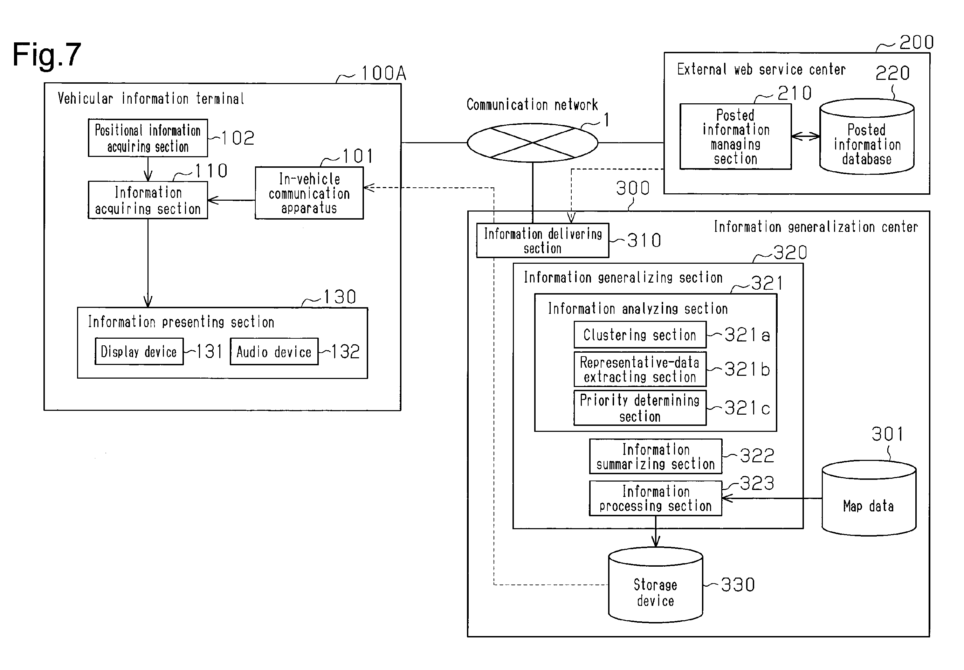

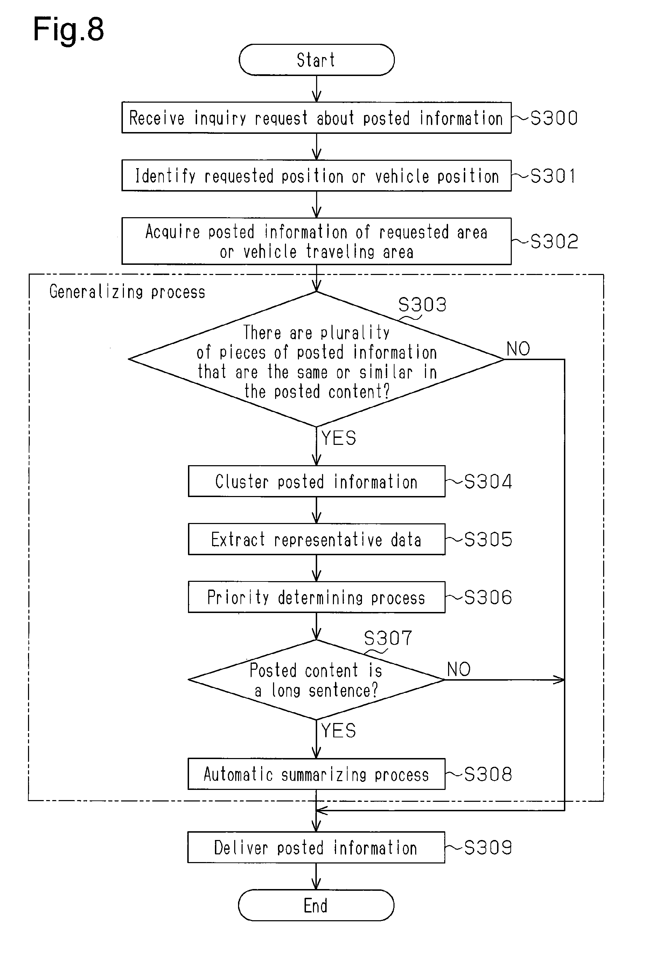

Next, a presentation information management system according to a second embodiment of the present invention will be described with reference to Fig. 7, which corresponds to Fig. 1 mentioned above, and Fig. 8, which corresponds to Fig. 3 mentioned above, while focusing on differences from the first embodiment.

As illustrated in Fig. 7, a vehicular information terminal 100A of the present embodiment is configured not to include the information generalizing section 120. On the other hand, in the present embodiment, posted information is generalized by an information generalization center 300, which forms the presentation information management system.

In other words, the information generalization center 300 has an information generalizing section 320, which has a function equivalent to that of the information generalizing section 120. The information generalizing section 320 has a function equivalent to that of the information analyzing section 121, and has an information analyzing section 321, which is composed of a clustering section 321a, a representative-data extracting section 321b, and a priority determining section 321c.

The information generalizing section 320 also has an information summarizing section 322 and an information processing section 323, which have functions equivalent to those of the information summarizing section 122 and the information processing section 123, respectively.

The information generalization center 300 of the present embodiment also has an information delivering section 310 communicable with the vehicular information terminal 100A and with the external web service center 200, map data 301 corresponding to the map data 103, and a storage device 330 in which posted information generalized by the information generalizing section 320 is stored.

In the present embodiment, posted information is generalized by the above described information generalization center 300. In the present embodiment, the presentation information management system is formed by the thus configured information generalization center 300.

Operation of the above described presentation information management system of the present embodiment will be hereinafter described with reference to Fig. 8.

As shown as step S300 in Fig. 8, when a request to present posted information concerning a position requested by the user of the vehicular information terminal 100A or a request to present posted information that exists in an area in which the vehicular information terminal 100A exists is made by the user of the vehicular information terminal 100A, the information acquiring section 110 inquires of the information generalization center 300 about the posted information requested to be presented. When a request to present the posted information is not made by the user, the vehicular information terminal 100A inquires of the information generalization center 300 about the posted information concerning the position of the vehicular information terminal 100A by transmitting the positional information of the vehicular information terminal 100A to the information generalization center 300. For example, when a destination is set by a driver, the vehicular information terminal 100A further quiries the external web service center 200 about posted information concerning this destination or about posted information concerning a point existing in the route to the destination.

When the inquiry request of the posted information is received, the information generalization center 300 identifies the position where the user has made the request or the position of the vehicle using the vehicular information terminal 100A (step S301).

Thereafter, the information generalization center 300 acquires posted information that has been posted at the identified position or posted information having the posted content concerning the identified position from the external web service center 200 (step S302).

When posted information is acquired, the same generalizing process as the process shown at steps S102 to S107 of Fig. 3 mentioned above is performed by the information generalizing section 320 of the information generalization center 300 (steps S303 to S308). The information generalization center 300 performs the process of generalizing the posted information, and then delivers the generalized posted information to the vehicular information terminal 100A (step S309).

The vehicular information terminal 100A acquires the posted information delivered from the information generalization center 300, and then presents the acquired posted information to the information presenting section 130. As a result, the posted information generalized by the information generalization center 300 is presented to the information presenting section 130.

As described above, according to the presentation information management system of the present embodiment, the aforementioned advantages (2) to (6) are achieved, and the following advantage is achieved instead of the aforementioned advantage (1).

(1A) The information generalization center 300 is provided with the information generalizing section 320, which generalizes a plurality of pieces of posted information that are the same or similar in the posted content. Therefore, it is possible for the information generalization center 300 to generalize pieces of posted information that are the same or similar in the posted content among pieces of posted information to be delivered to the vehicular information terminal 100A. This makes it possible to deliver minimum necessary pieces of posted information to the vehicular information terminal 100A without allowing pieces of posted information that overlap with each other in the posted content to be delivered to the vehicular information terminal 100A beyond necessity. Moreover, this makes it possible for the vehicular information terminal 100A to present posted information with a high visibility to the user merely by presenting the posted information acquired from the information generalization center 300. In the present embodiment, posted information that has been generalized once is delivered from the information generalization center 300 to the vehicular information terminal 100A. As a result, a large number of pieces of posted information that are the same or similar in the posted content are never delivered from the information generalization center 300 to the vehicular information terminal 100A. Therefore, it is also possible to greatly reduce the amount of communication between the information generalization center 300 and the vehicular information terminal 100A.

### Third Embodiment

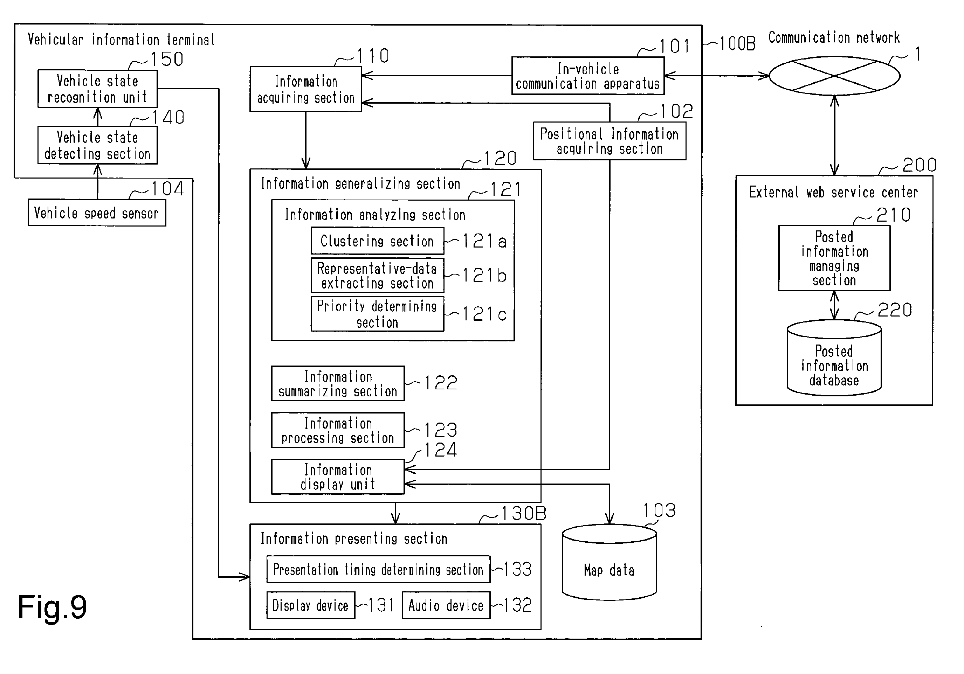

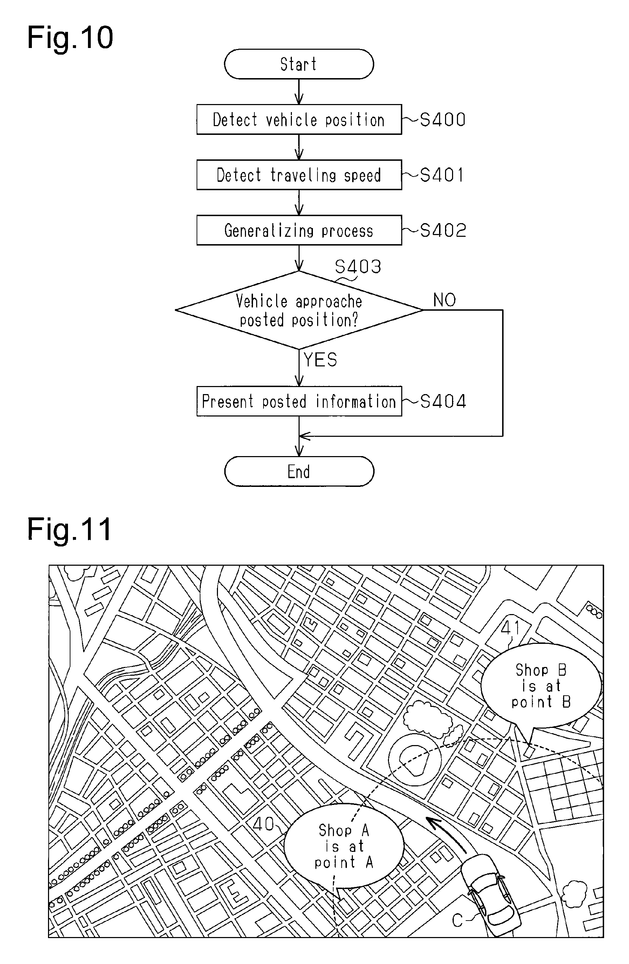

Next, an information presenting device according to a third embodiment of the present invention will be described with reference to Fig. 9, which corresponds to Fig. 1 mentioned above, and Fig. 10 to Fig. 12.

As shown in Fig. 9, a vehicular information terminal 100B of the present embodiment is further provided with a vehicle state detecting section 140, which detects the state of a vehicle that uses the vehicular information terminal 100B. The vehicle state detecting section 140 detects the traveling speed of the vehicle, for example, by taking in a detection result of a vehicle speed sensor 104 mounted in the vehicle from the vehicle. The vehicle state detecting section 140 detects the traveling speed of the vehicle, and then outputs this detection result to a vehicle state recognition unit 150, which recognizes a vehicle state.

When the detection result of the vehicle traveling speed is input, the vehicle state recognition unit 150 recognizes the traveling state of the vehicle based on the detection result. Thereafter, the vehicle state recognition unit 150 outputs information showing the recognized vehicle traveling state to the information presenting section 130B.

The information presenting section 130B of the present embodiment is further provided with a presentation timing determining section 133, which determines the timing for presenting posted information generalized by the information generalizing section 120 based on the vehicle traveling state recognized by the vehicle state recognition unit 150. When image data plotted by the map data 103 is input from the information display unit 124, the presentation timing determining section 133 determines the output timing of the image data based on a vehicle traveling position and a vehicle traveling state that are input from the vehicle state recognition unit 150. Likewise, when audio data that guides posted information is input from the information processing section 123, the presentation timing determining section 133 determines the output timing of the audio data based on a vehicle traveling position and a vehicle traveling state that are input from the vehicle state recognition unit 150. The presentation timing determining section 133 of the present embodiment determines the output timing of image data or of audio data based on, for example, a vehicle position, a vehicle traveling direction, and a vehicle traveling speed.

Operation of the information presenting device of the present embodiment will be hereinafter described with reference to Fig. 10 to Fig. 12.

As shown in Fig. 10, when posted information is presented, a vehicle traveling position and a vehicle traveling speed are first detected (steps S400 and S401). Thereafter, posted information concerning shops that exist in a vehicle traveling area or that exist ahead in the vehicle traveling direction and posted information concerning road conditions are acquired from the external web service center 200, and a generalizing process with respect to the acquired posted information is performed (step S402).

When the generalizing process is performed, it is determined whether a period of time until the vehicle reaches a neighborhood of the posted position falls within a prescribed period of time based on, for example, the vehicle traveling speed at that time and the distance from the posted position of posted information to the vehicle among the pieces of generalized posted information. When the period of time until the vehicle reaches the neighborhood of the posted position falls within the prescribed period of time, such as ten seconds, the vehicle is regarded as having approached the posted position of posted information, and the generalized posted information is presented (step S403: YES, S404).

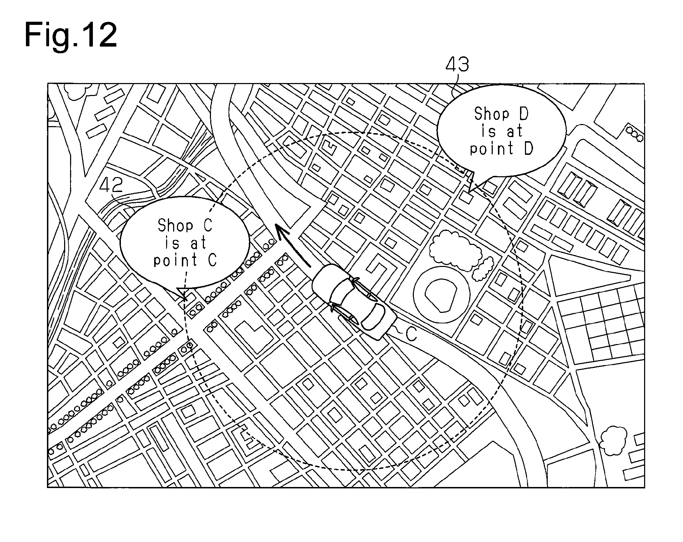

As a result, as shown in Fig. 11, when the period of time until a vehicle C traveling in a certain direction reaches the neighborhood of the posted position falls within the prescribed period of time, posted information 40 and posted information 41 are displayed on the display device 131. The display period of time of the posted information 40 and 41 at this time is also determined based on, for example, the traveling speed of the vehicle C. Thereafter, when the vehicle C travels forward, the posted information 40 and the posted information 41 disappear from the screen, and posted information 42 and posted information 43 are newly displayed on the screen as shown in Fig. 12.

In the present embodiment, posted information is thus presented at timing corresponding to the traveling position and the traveling speed of the vehicle C whenever the vehicle C moves. As a result, for example, when the vehicle C is in a high-speed traveling state, posted information existing at a far place is displayed at an early stage. On the other hand, when the vehicle C is in a low-speed traveling state, posted information that exists around the vehicle C is displayed for a long time.

As described above, according to the presentation information management system of the present embodiment, the aforementioned advantages (1) to (6) are achieved, and the following advantage is achieved.

(7) The vehicular information terminal 100B is provided with the vehicle state detecting section 140, which detects the traveling speed of the vehicle C using the vehicular information terminal 100B. Based on the traveling position and the traveling speed of the vehicle C, the presentation timing of posted information is determined. Therefore, even if the period of time during which the vehicle reaches the neighborhood of the posted position of the posted information varies according to a change in the vehicle traveling speed, it is possible to keep the period of time for a fixed period of time or more until the vehicle C reaches the neighborhood of the posted position of the posted information after the posted information is presented.

### Fourth Embodiment

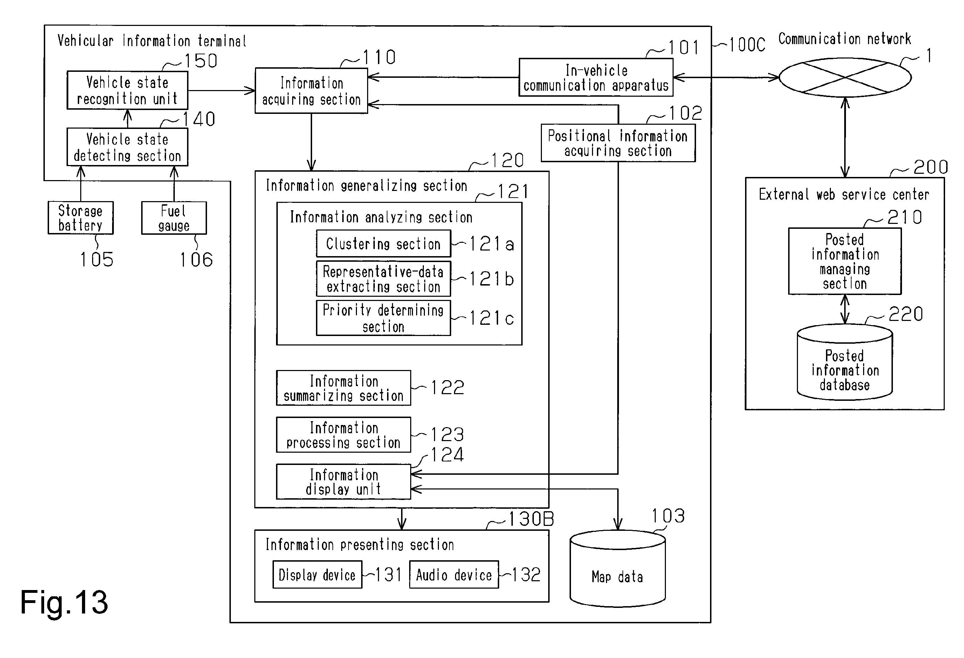

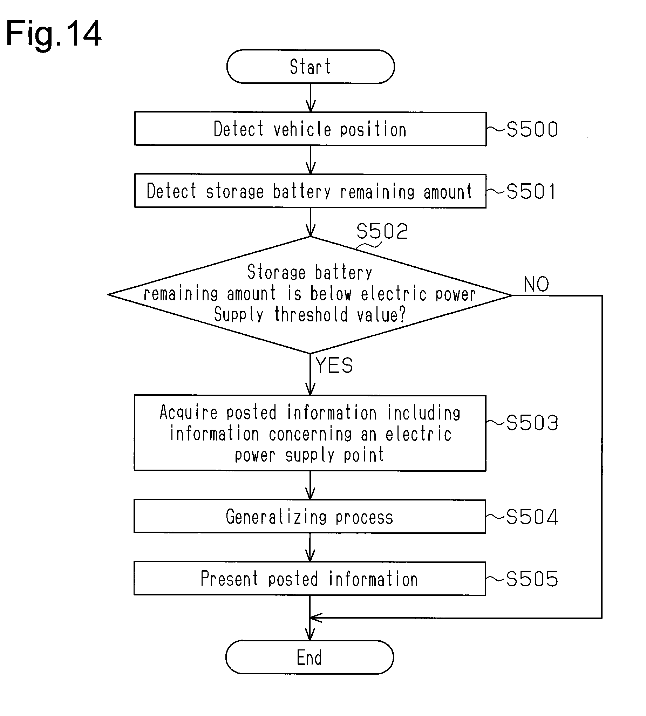

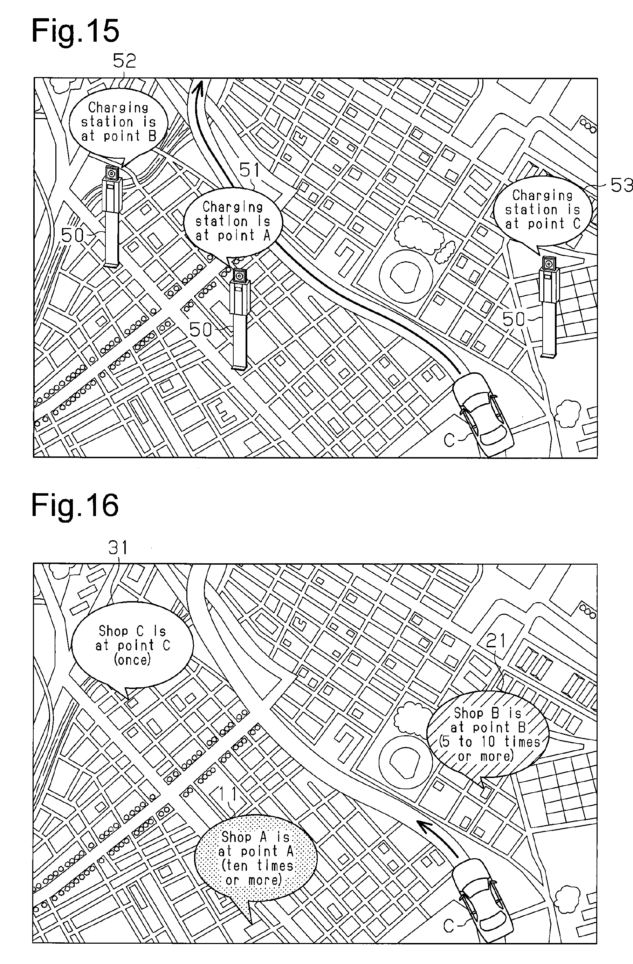

Next, an information presenting device according to a fourth embodiment of the present invention will be described with reference to Fig. 13, which corresponds to Fig. 1 mentioned above, and Fig. 14 and Fig. 15. The information presenting device of the present embodiment is used in, for example, a plug-in hybrid automobile.

As shown in Fig. 13, the vehicular information terminal 100C of the present embodiment is further provided with the vehicle state detecting section 140, which detects the state of a vehicle using the vehicular information terminal 100C. For example, the vehicle state detecting section 140 monitors the charging rate of a storage battery 105, which serves as a power source of a motor mounted as a vehicle driving source. Moreover, for example, the vehicle state detecting section 140 monitors the amount of remaining fuel of the vehicle based on a detection value of a fuel gauge 106 mounted in the vehicle. Thereafter, the vehicle state detecting section 140 outputs information showing the monitored charging rate of the storage battery 105 and the amount of remaining fuel to the vehicle state recognition unit 150.

When a detection result of the vehicle traveling speed is input, the vehicle state recognition unit 150 recognizes the charging rate and the remaining fuel amount of the storage battery 105 based on this detection result. For example, when the charging rate of the storage battery 105 becomes below or equal to an electric power supply threshold value showing a decrease in the charging rate, the vehicle state recognition unit 150 predicts that the charging rate of the storage battery 105 will be reduced and that the electric power supplied to the motor will become insufficient. When the remaining fuel amount detected by the fuel gauge 106 becomes below or equal to an oil feeding threshold value showing a decrease in the fuel amount, the vehicle state recognition unit 150 predicts that the remaining fuel amount will be reduced and that the fuel supplied to the engine will become insufficient. Thereafter, the vehicle state recognition unit 150 outputs this prediction result to the information acquiring section 110.

When information showing the lack of electric power is input as a prediction result of the vehicle state recognition unit 150, the information acquiring section 110 of the present embodiment inquires of the external web service center 200 about posted information concerning an electric power supply point showing the installation position of a charging station capable of charging the storage battery 105. Moreover, when information showing the lack of electric power is input as a prediction result of the vehicle state recognition unit 150, the information acquiring section 110 inquires of the external web service center 200 about, for example, posted information concerning an electric power supply point (regenerative point) showing an area capable of charging the storage battery 105 by means of a regenerative brake in a road surface inclination. Moreover, when information showing the lack of fuel is input as a prediction result of the vehicle state recognition unit 150, the information acquiring section 110 inquires of the external web service center 200 about, for example, posted information concerning an oil feeding point showing the installation position of a filling station.

The information acquiring section 110 acquires the inquired posted information from the external web service center 200, and then outputs the acquired posted information to the information generalizing section 120. Thereafter, the information generalizing section 120 generalizes the posted information input from the information acquiring section 110, and outputs this generalized posted information to the information presenting section 130. As a result, for example, posted information that guides a charging station or an area capable of charging the storage battery 105 and posted information that guides a filling station capable of feeding fuel are presented to the user.

Operation of the information presenting device of the present embodiment will be hereinafter described with reference to Figs. 14 and 15.

As shown in Fig. 14, when a vehicle position is detected and, for example, when the charging rate of the storage battery 105 is detected, it is determined whether this detected charging rate is below or equal to an electric power supply threshold value (steps S500 to S502).

When the charging rate of the storage battery 105 is reduced to or below the electric power supply threshold value (step S502: YES), posted information concerning an electric power supply point is acquired from the external web service center 200 (step S503). Thereafter, a generalizing process with respect to this acquired posted information is performed, and generalized posted information is presented to the information presenting section 130 (steps S504 and S505).

As a result, as shown in Fig. 15, an icon 50 showing the charging station and balloons 51 to 53 of the generalized posted information are displayed on, for example, map data displayed on the display device 131. Moreover, for example, voice guidance concerning the electric power supply point based on this generalized posted information is performed by the audio device 132.

Likewise, when the fuel is reduced, posted information showing the installation position of, for example, the filling station is acquired from the external web service center 200, and this posted information is generalized, and is then presented to the user.

As described above, according to the presentation information management system of the present embodiment, the aforementioned advantages (1) to (6) are achieved, and the following advantage is achieved.

(8) The vehicular information terminal 100C is provided with the vehicle state detecting section 140, which detects the charging rate and the remaining fuel amount of the storage battery 105 mounted in the vehicle C. When the charging rate or the remaining fuel amount is reduced, posted information concerning an electric power supply point and an oil feeding point is acquired from the external web service center 200, and the acquired posted information is generalized. Therefore, in response to a reduction in the fuel remaining amount of the vehicle C or a reduction in the charging rate of the storage battery 105, posted information concerning the filling station or the charging station is presented to the information presenting section 130 at timing at which fuel-oil feeding or storage-battery charging is expected to be performed. This makes it possible to actively present posted information peculiar to the vehicle in accordance with the charge remaining amount or the fuel remaining amount of the vehicle, and the convenience of the vehicular information presenting section is improved.

### Other Embodiments

The aforementioned embodiments may be modified as follows.

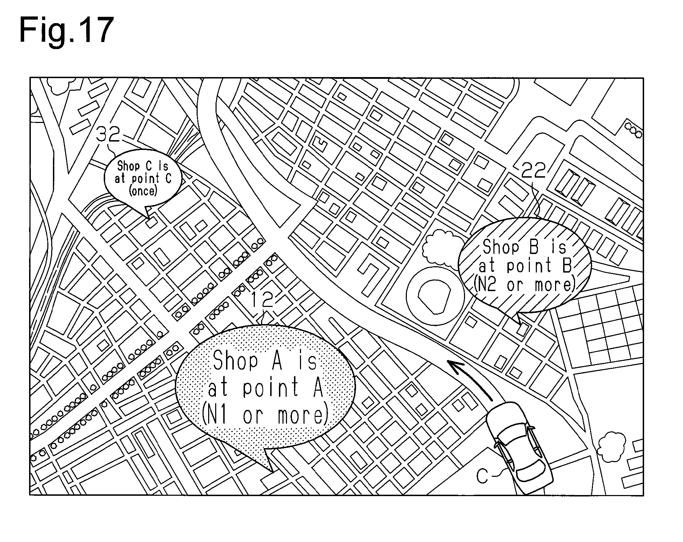

In the aforementioned embodiments, the priority of posted information is reflected in the size of a balloon showing the posted information. Without being limited to this, the priority of posted information may be reflected in the display color of each balloon 11,21, and 31 showing the posted information as shown in, for example, Fig. 16, which corresponds to Fig. 5 mentioned above. Alternatively, the priority of posted information may be reflected in the size and the display color of each balloon 12, 22, and 32 showing the posted information as shown in, for example, Fig. 17, which corresponds to Fig. 5 mentioned above. Without being limited to this, counted numbers of posted information or characters, such as high, middle, and low priorities of the posted content, may be displayed along with posted information in accordance with the priority of the posted information. Likewise, the display mode of posted information may be switched between always-lighting display and flashing display in accordance with the priority of the posted information. In short, it is only necessary to set the presentation mode of posted information in manners that vary in accordance with the priority of the posted information.

In the aforementioned embodiments, the priority of posted information is determined to be classified into three stages of high, middle, and low priorities. Without being limited to this, the priority of posted information may be determined to be classified into two stages or into four or more stages.

In the aforementioned embodiments, the priority of posted information is determined in accordance with the number of pieces of posted information that belong to a group in which the pieces of posted information are the same or similar in the posted content. Without being limited to this, the reliability of posted information may be determined based on the posting source of the posted information, and this determined reliability may be reflected in the presentation mode of the posted information. According to this, for example, a user or an information terminal that posts posted information having high reliability is identified beforehand. Based on the posting source of posted information, the reliability of posted information is discriminated, and a discrimination result obtained here is reflected in the presentation mode of the posted information. As a result, for example, even if the posted information is small in the number of pieces of posted information, posted information having high reliability will be displayed in a highlighted manner. This makes it possible to present posted information in accordance with the reliability of the posted information, and makes it possible for the user to acknowledge both the content of the posted information and the reliability of the posted information. Neither the priority nor the reliability of posted information may be determined, and neither the priority nor the reliability of posted information may be reflected in the presentation of the posted information. According to this, the vehicular information terminals 100A, 100B, and 100C, and the information generalization center 300 are configured not to include the priority determining sections 121c and 321c.

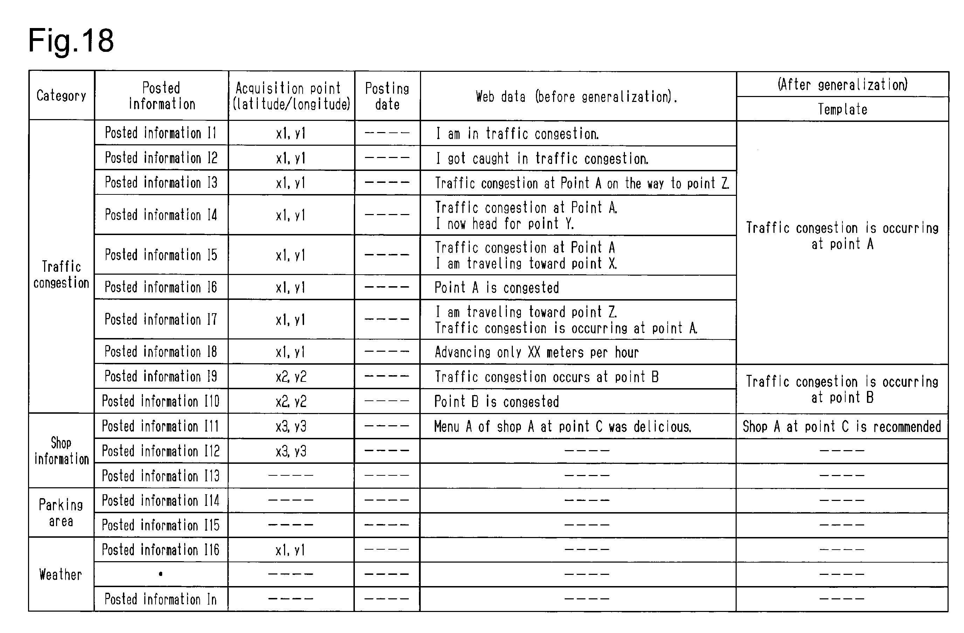

In the aforementioned embodiments, posted information is generalized by selecting posted information serving as a representative from among a plurality of pieces of posted information that are the same or similar in the posted content. Without being limited to this, as shown in, for example, Fig. 18, which corresponds to Fig. 2 mentioned above, predetermined template information corresponding to posted information may be substituted for a plurality of pieces of posted information that are the same or similar in the posted content. According to this, for example, when a plurality of pieces of posted information I1 to I8 showing the occurrence of traffic congestion at the point A are acquired, one template information "traffic congestion is occurring at point A" is substituted for those pieces of posted information I1 to I8. As a result, this template information is presented instead of the pieces of posted information 11 to I8. According to this, it is possible to impart the posted content to the user by means of prepared template information having high versatility. Besides this, for example, when the posted information I8 among the plurality of pieces of posted information I1 to 18, which are the same or similar in the posted content, is information posted from a predetermined information terminal or from a predetermined user that is a posting source having high reliability, posted information may be generalized by selecting the posted information 18 as a representative. Besides this, the generalizing process of posted information may be merely required to be a process in which the number of pieces of posted information to be presented can be reduced while maintaining the pieces of posted information that are the same or similar in the posted content without changing the posted content.

In the fourth embodiment (Fig. 13) mentioned above, the information acquiring section 110 forming the vehicular information terminal 100C acquires posted information concerning an electric power supply point or an oil feeding point from the external web service center 200 at step S503 of Fig. 14. Thereafter, the information generalizing section 120 generalizes the posted information concerning an electric power supply point or an oil feeding point acquired by the information acquiring section 110. Without being limited to this, when the information acquiring section 110 acquires a plurality of kinds of posted information including an electric power supply point or an oil feeding point, the information generalizing section 120 may selectively extract posted information to be generalized from the information acquiring section 110 based on the charging rate or the fuel remaining amount of the storage battery 105. This also makes it possible to achieve an advantage equivalent to the aforementioned advantage (7).

In the third embodiment (Fig. 9) mentioned above, the vehicular information terminal 100B acquires posted information from the external web service center 200, and determines the presentation timing of generalized posted information based on the traveling speed of the vehicle C. Without being limited to this, for example, the vehicular information terminal 100B may determine timing at which posted information is acquired from the external web service center 200 based on the traveling speed of the vehicle C. According to this, posted information is acquired from the external web service center 200 at any time at timing at which posted information is required to be presented.

In the third embodiment mentioned above, the traveling speed of the vehicle C is detected based on a detection result of the vehicle speed sensor 104. Without being limited to this, the traveling speed of the vehicle C may be detected based on, for example, a change in the position of the vehicular information terminal 100B detected by the positional information acquiring section 102 of the vehicular information terminal 100B.

In the third embodiment mentioned above, the traveling speed of the vehicle C is detected as a state of the vehicle C. Based on this detected traveling speed, the presentation timing of posted information is determined. In the fourth embodiment mentioned above, the charging rate and the remaining fuel amount of the storage battery 105 are detected as a state of the vehicle C. When the charging rate and the remaining fuel amount reduction, posted information concerning an electric power supply point and an oil feeding point is generalized, and is presented to the user. Moreover, the traveling speed, the charging rate of the storage battery 105, and the remaining fuel amount may be all detected as a state of the vehicle C, and it is permitted to jointly perform both the determination of the presentation timing of posted information based on the traveling speed of the vehicle C and the presentation of posted information concerning an electric power supply point and an oil feeding point when the charging rate and the remaining fuel amount are decreased. Moreover, the presentation timing of posted information concerning an electric power supply point or an oil feeding point may be determined based on the traveling speed of the vehicle C.

In the fourth embodiment mentioned above, the charging rate and the remaining fuel amount of the storage battery 105 are detected as a state of the vehicle C, which is a plug-in hybrid automobile, and, when the charging rate and the remaining fuel amount are reduced, posted information concerning an electric power supply point or an oil feeding point is generalized, and is presented to the user. Without being limited to this, only the charging rate may be detected as a vehicle state, and posted information concerning an electric power supply point may be generalized and presented to the user. Likewise, only the fuel remaining amount may be detected as a vehicle state, and posted information concerning an oil feeding point may be generalized and presented to the user. The vehicle using the vehicular information terminals 100, 100A, 100B, and 100C is not limited to a plug-in hybrid automobile, and may be an engine automobile in which only an engine is a driving source, an electric automobile in which only a motor is a driving source, or a hybrid automobile.

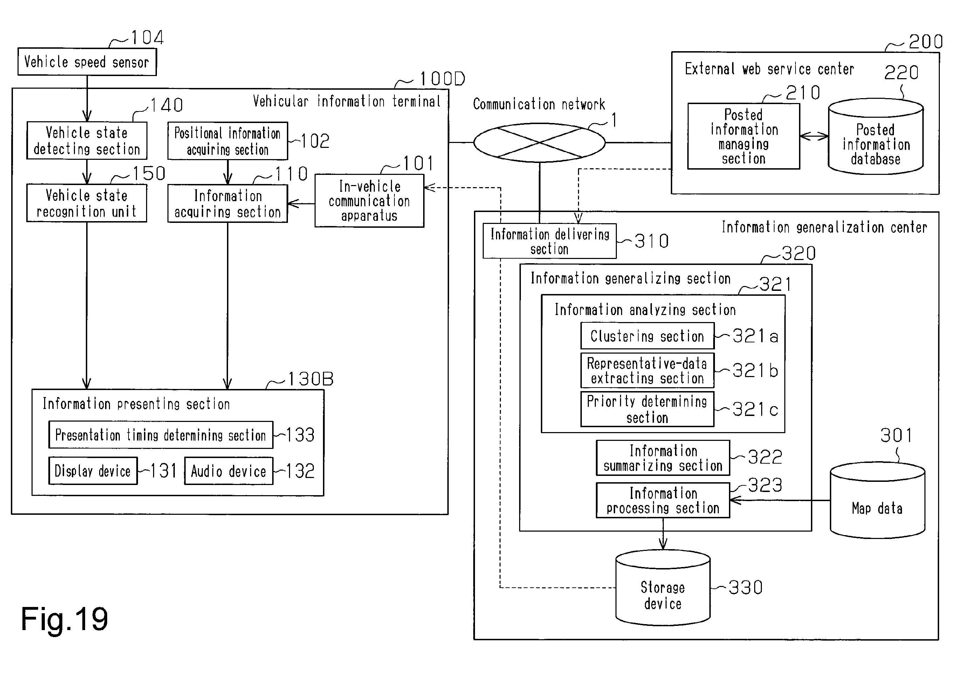

In the third embodiment (Fig. 9) mentioned above, when the vehicular information terminal 100B generalizes posted information, the presentation timing of the posted information is determined based on the traveling speed of the vehicle C. Without being limited to this, as shown in, for example, Fig. 19, which corresponds to Figs. 7 and 9 mentioned above, when posted information is generalized by the information generalization center 300, the presentation timing of posted information that has been generalized and that is delivered from the information generalization center 300 may be determined based on the traveling speed of the vehicle C detected by the vehicle state detecting section 140 mounted in the vehicular information terminal 100D. This also makes it possible to achieve an advantage equivalent to the aforementioned advantage (7).

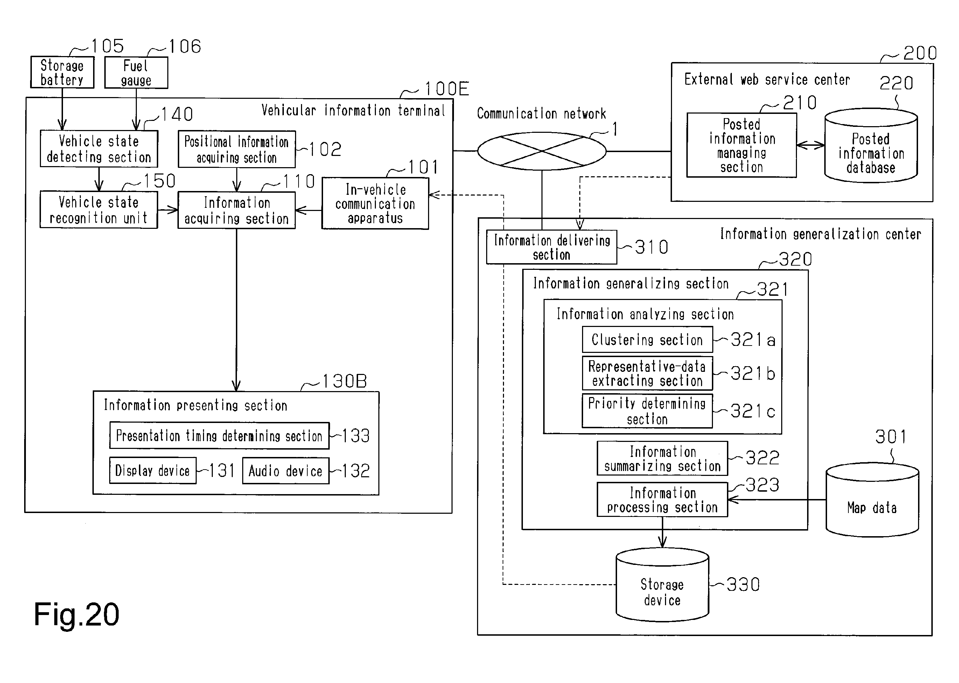

In the fourth embodiment (Fig. 13) mentioned above, when the vehicular information terminal 100C generalizes posted information, posted information concerning an electric power supply point or an oil feeding point is generalized in accordance with the charging rate of the storage battery 105 or the fuel remaining amount. Without being limited to this, as shown in Fig. 20, which corresponds to Figs. 7 and 13 mentioned above, posted information concerning an electric power supply point or an oil feeding point may be generalized by the information generalization center 300. According to this, when information in which the charging rate of the storage battery 105 or the fuel remaining amount is predicted to be reduced is input from the vehicle state recognition unit 150, the information presenting section 130B inquires of the information generalization center 300 about posted information concerning an electric power supply point or an oil feeding point. As an inquiry result, the information presenting section 130 presents posted information concerning the electric power supply point or the oil feeding point that has been generalized and that is delivered from the information generalization center 300. This also makes it possible to achieve an advantage equivalent to the aforementioned advantage (8).

In the third embodiment (Fig. 9) mentioned above, the vehicle traveling speed is detected by allowing the vehicular information terminal 100B to take in a detection result of the vehicle speed sensor 104 mounted in the vehicle. Without being limited to this, the vehicle speed sensor 104 may be configured to be mounted in the vehicular information terminal 100B. Besides this, in the aforementioned embodiments, sensors etc., capable of detecting a vehicle state may be configured to be mounted in the vehicular information terminals 100, 100A, 100B, and 100C.

In the first, third, and fourth embodiments mentioned above, the information generalizing section 120 is provided in the vehicular information terminals 100, 100B, and 100C, and posted information is generalized by the vehicular information terminals 100, 100B, and 100C. In the second embodiment mentioned above, the information generalizing section 320 is provided in the information generalization center 300, and posted information is generalized by the information generalization center 300. Without being limited to this, for example, the information generalizing section may be configured to be provided in the external web service center 200, and posted information to be delivered may be generalized by this external web service center 200. According to this, a performer that collects and delivers posted information and a performer that generalizes posted information are united together, thus making it possible to deliver posted information that has been beforehand generalized to a destination that uses the posted information. As a result, the amount of communication between the external web service center 200 and a destination to which posted information is delivered is greatly reduced. In this configuration in which the external web service center 200 includes the information generalizing section, the presentation information management system is formed by the external web service center 200.

In the aforementioned embodiments, the information presenting device is formed by the vehicular information terminals 100, 100A, 100B, and 100C used in the vehicle. Without being limited to this, the information presenting device may be merely required to be a device capable of presenting posted information, and may be an information terminal, such as a tablet terminal that is used by the user regardless of being in the vehicle or being outside the vehicle, or a portable terminal, such as a smartphone, or an information terminal, such as a personal computer.

In the aforementioned embodiments, posted information concerning the position of the vehicle C or concerning the position at which the user has made a request is generalized as posted information to be generalized. Without being limited to this, when posted information is classified according to categories (attributes), such as information concerning shops, information concerning road conditions, or information concerning weather, posted information concerning a specific category may be generalized.

In the aforementioned embodiments, the information presenting section 130 or 130B is composed of the display device 131 and the audio device 132. Without being limited to this, the information presenting section 130 or 130B may be composed of only the display device 131 or only the audio device 132. According to this configuration, generalized posted information is presented only by images or only by sounds.

In the aforementioned embodiments, posted information is generalized by making a plurality of pieces of posted information that are the same or similar in the posted content into one posted information. Without being limited to this, posted information may be generalized by reducing three or more pieces of posted information that are the same or similar in the posted content to two or more pieces of posted information. The number of pieces of posted information to be presented to the user can also be reduced by this, and can be easily checked.

### DESCRIPTION OF THE REFERENCE NUMERALS

1... Communication network, 10, 11, 12, 20, 21, 22, 30, 31, 32, 40 to 43... Balloon of posted information, 50... Icon showing posted information, 51 to 53... Balloon of posted information, 100, 100A, 100B, 100C, 100D... Vehicular information terminal, 101... Vehicular communication apparatus, 102... Positional information acquiring section, 103... Map data, 104... Vehicle speed sensor, 105... Storage battery, 106... Fuel gauge, 110... Information acquiring section, 120... Information generalizing section, 121... Information analyzing section, 121a... Clustering section, 121b... Representative-data extracting section, 121c... Priority determining section, 122... Information summarizing section, 123... Information processing section, 124... Information display unit, 130... Information presenting section, 130B... Information presenting section, 131... Display device, 132... Audio device 133... Presentation timing determining section, 140... Vehicle state detecting section, 150... Vehicle state recognition unit, 200... External web service center, 210... Posted information managing section, 220... Posted information database, 300... Information generalization center, 301... Map data, 310... Information delivering section, 320... Information generalizing section, 321... Information analyzing section, 321a... Clustering section, 321b... Representative-data extracting section, 321c... Priority determining section, 322... Information summarizing section, 323... Information processing section, 330... Storage device, G1, G2, G3... Group of posted information

## Claims

1. An information presenting device that presents posted information delivered by a management center that manages posted information, the information presenting device being **characterized by**:
an information acquiring section that acquires the posted information from the management center;
an information generalizing section that generalizes a plurality of pieces of posted information that are the same or similar in posted content among the posted information acquired by the information acquiring section; and
an information presenting section that presents the generalized posted information to a user.

2. The information presenting device according to claim 1, **characterized in that**
the posted information is managed to be classified according to positions where the posted information has been posted or according to positions indicated by the posted contents of the posted information, and
the information generalizing section generalizes a plurality of pieces of posted information concerning positions at which a request has been made or concerning the position of the information presenting device.

3. The information presenting device according to claim 1 or 2, **characterized in that** the information generalizing section includes an information analyzing section that generalizes the posted information through at least one of the following processes:
(a) a process for selecting representative posted information from among a plurality of pieces of posted information, and
(b) a process for substituting predetermined template information corresponding to posted information for a plurality of pieces of posted information of which the posted contents are the same or similar.

4. The information presenting device according to any one of claims 1 to 3, **characterized in that** the information generalizing section further includes an information summarizing section that summarizes posted content of posted information through execution of an automatic summarizing process with respect to the posted information when an information amount of the posted information exceeds a prescribed information amount.

5. The information presenting device according to any one of claims 1 to 4, **characterized in that**
the information generalizing section further includes
a priority determining section that counts the number of pieces of posted information to be generalized and determines priority of posted information based on the counted number, and
an information processing section that processes the posted information into information that can be presented in a manner that varies in accordance with the determined priority, and
the information presenting section presents the processed posted information in a manner that varies in accordance with the determined priority.

6. The information presenting device according to any one of claims 1 to 5, **characterized in that** the information presenting device is formed by a vehicular information terminal that is used in a vehicle and includes a positional information acquiring section that acquires positional information of the vehicle.

7. The information presenting device according to claim 6, **characterized in that**
the vehicular information terminal further includes a vehicle state detecting section that detects a state of the vehicle, and
the information acquiring section takes into consideration the vehicle state detected by the vehicle state detecting section to perform at least one of the process for acquiring the posted information and the process for presenting the posted information.

8. The information presenting device according to claim 7, **characterized in that**
the vehicle state detecting section detects a vehicle traveling speed as the state of the vehicle, and
the information presenting section takes into consideration the positional information of the vehicle acquired by the positional information acquiring section and the vehicle traveling speed detected by the vehicle state detecting section to determine timing at which the posted information should be presented.

9. The information presenting device according to claim 7 or 8, wherein
the vehicle state detecting section detects, as the state of the vehicle, at least one of a fuel remaining amount of the vehicle and a charging rate of a storage battery when the vehicle is an electric automobile or a hybrid automobile, and
when the detected fuel remaining amount of the vehicle or the detected charging rate is below or equal to a prescribed remaining amount, the information acquiring section acquires posted information concerning a filling station or a charging station that exists in a traveling area of the vehicle found from the positional information of the vehicle acquired by the positional information acquiring section from the management center.

10. The information presenting device according to any one of claims 6 to 9, **characterized in that**
the vehicular information terminal performs a route search process for searching for a recommended route from a start point to a destination point,
the information acquiring section acquires posted information concerning a point that exists in the recommended route found through the route search process or posted information concerning a point included in an area within a predetermined range including the recommended route, and
the information generalizing section generalizes the selected posted information.

11. A presentation information management system that manages posted information to be delivered to an information terminal, the presentation information management system being **characterized by**:
an information managing section that collects the posted information and manages the collected posted information;
an information generalizing section that generalizes a plurality of pieces of posted information that are the same or similar in posted content among the posted information managed by the information managing section; and
an information delivering section that delivers, as presentation information, the generalized posted information to the information terminal.

12. The presentation information management system according to claim 11, wherein
the information managing section manages the posted information by classifying the posted information according to positions where the posted information has been posted or according to positions indicated by the posted content of the posted information, and
the information generalizing section acquires a plurality of pieces of posted information concerning a position requested from the information terminal or a plurality of pieces of posted information concerning the position of the information terminal from the information managing section, and generalizes the acquired posted information.

13. The presentation information management system according to claim 11 or 12, **characterized in that** the information generalizing section includes an information analyzing section that generalizes the posted information through at least one of the following processes:
(a) a process for selecting representative posted information from among a plurality of pieces of posted information, and
(b) a process for substituting predetermined template information corresponding to posted information for a plurality of pieces of posted information of which the posted contents are the same or similar.

14. The presentation information management system according to any one of claims 11 to 13, **characterized in that** the information generalizing section further includes an information summarizing section that summarizes posted content of posted information through execution of an automatic summarizing process with respect to the posted information when an information amount of the posted information exceeds a prescribed information amount.

15. The presentation information management system according to any one of claims 11 to 14, **characterized in that** the information generalizing section further includes an information processing section that
counts the number of pieces of posted information to be generalized,
determines priority of posted information based on the counted number, and
processes the posted information into information that can be presented by means of the information terminal in a manner that varies in accordance with the determined priority.

16. The presentation information management system according to any one of claims 11 to 15, **characterized in that**
the information terminal is formed by a vehicular information terminal that is used in a vehicle and includes a positional information acquiring section that acquires positional information of the vehicle, and
the information generalizing section selects posted information to be generalized based on the positional information of the vehicle obtained through wireless communication with the vehicular information terminal.

17. The presentation information management system according to claim 16, **characterized in that**
the vehicular information terminal further includes a vehicle state detecting section that detects a state of the vehicle, and
the information generalizing section selects posted information to be generalized based on a detection result of the vehicle state detecting section obtained through wireless communication with the vehicular information terminal.

18. The presentation information management system according to claim 17, wherein
the vehicle state detecting section detects a traveling speed of the vehicle as the state of the vehicle, and
the information delivering section determines timing at which the generalized posted information is delivered based on the positional information of the vehicle obtained through wireless communication with the vehicular information terminal and the information showing the traveling speed of the vehicle.

19. The presentation information management system according to any one of claims 16 to 18, wherein
the vehicle state detecting section detects, as the state of the vehicle, at least one of a fuel remaining amount of the vehicle and a charging rate of a storage battery when the vehicle is an electric automobile or a hybrid automobile, and
when the fuel remaining amount of the vehicle obtained through wireless communication with the vehicular information terminal or a detection value of the charging rate is below or equal to a prescribed remaining amount value, the information generalizing section selects, as posted information to be generalized, posted information concerning a filling station or a charging station that exists in a traveling area of the vehicle found from the positional information of the vehicle.

20. The presentation information management system according to any one of claims 16 to 19, **characterized in that**
the vehicular information terminal performs a route search process for searching for a recommended route from a start point to a destination point,
the information generalizing section acquires information showing the recommended route found by the route search process through wireless communication with the vehicular information terminal, and selects, as posted information to be generalized, posted information concerning a point that exists in the recommended route or posted information concerning a point included in an area within a predetermined range including the recommended route.
